# EUROPEAN PATENT APPLICATION

(11) **EP 4 730 893 A1**
(43) Date of publication of application: **22.04.2026**
(21) Application number: 23941107.7
(22) Date of filing: 16.06.2023
(51) Int. Cl.: H04W 72/232

(54) **SCHEDULING METHOD AND APPARATUS, DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: LIN, Yanan, Dongguan, Guangdong 523860 (CN); LIANG, Bin, Dongguan, Guangdong 523860 (CN); XU, Jing, Dongguan, Guangdong 523860 (CN)
(74) Representative: Novagraaf Technologies
(86) International application number: PCT/CN2023/100818
(87) International publication number: WO 2024/254874

(57) **Abstract**

The present application relates to the field of communications, and discloses a scheduling method and apparatus, a device, and a storage medium. The method comprises: receiving a first signaling, information indicated by the first signaling comprising a first number; and receiving the first number of a second signaling. The first signaling and the second signaling are used to schedule a second number of physical channels or cells. The first number is an integer greater than or equal to 0, and the second number is a positive integer. Simultaneous scheduling of more physical channels or cells is supported, thus scheduling efficiency is improved, reliability is increased, power consumption waste caused by meaningless blind detection is prevented, and the utilization efficiency of transmission resources is improved.

## Description

### TECHNICAL FIELD

The present disclosure relates to the field of communications, and in particular, relates to a scheduling method, and an apparatus, a device, and a storage medium thereof.

### RELATED ART

The communication system in a related art is capable of supporting up to 16 cells for aggregation and supporting simultaneously scheduling of physical channels within a plurality of cells over single downlink control information (DCI). Obviously, the more cells the DCI schedules, the more power consumption of the terminal device is saved and the more system efficiency is improved.

However, in the related art, a single piece of DCI is only capable of simultaneously scheduling physical channels within a maximum of four cells, but the single piece of DCI is incapable of simultaneously scheduling more cells. The main reason is that the number of information bits in the DCI depends on the coding capacity, and thus the DCI is incapable of carrying scheduling information required by more cells.

How to achieve simultaneous scheduling of more cells to improve system efficiency is an urgent problem to be addressed.

### SUMMARY

Embodiments of the present disclosure provide a scheduling method, and an apparatus, a device and a storage medium thereof. The technical solutions are as follows.

According to an aspect of the present disclosure, a scheduling method is provided. The method is performed by a terminal device. The method includes: receiving a first signaling, wherein information indicated by the first signaling includes a first quantity; and receiving a first quantity of second signalings; wherein the first signaling and the second signaling are configured to schedule a second quantity of physical channels or cells, the first quantity is an integer greater than or equal to 0, and the second quantity is a positive integer.

According to an aspect of the present disclosure, a scheduling method is provided. The method is performed by a network device. The method includes: transmitting a first signaling, wherein information indicated by the first signaling includes a first quantity; and transmitting a first quantity of second signalings; wherein the first signaling and the second signaling are configured to schedule a second quantity of physical channels or cells, the first quantity is an integer greater than or equal to 0, and the second quantity is a positive integer.

According to an aspect of the present disclosure, a scheduling apparatus is provided. The apparatus includes: a first receiving module, configured to receive a first signaling, wherein information indicated by the first signaling includes a first quantity; and a second receiving module, configured to receive a first quantity of second signalings; wherein the first signaling and the second signaling are configured to schedule a second quantity of physical channels or cells, the first quantity is an integer greater than or equal to 0, and the second quantity is a positive integer.

According to an aspect of the present disclosure, a scheduling apparatus is provided. The apparatus includes: a second transmitting module, configured to transmit a first signaling, wherein information indicated by the first signaling includes a first quantity; and a third transmitting module, configured to transmit a first quantity of second signalings; wherein the first signaling and the second signaling are configured to schedule a second quantity of physical channels or cells, the first quantity is an integer greater than or equal to 0, and the second quantity is a positive integer.

According to an aspect of the present disclosure, a terminal device is provided. The terminal device includes: a processor; a transceiver connected to the processor; and a memory for storing one or more executable instructions of the processor; wherein the processor, when loading and executing the one or more executable instructions, is caused to perform the scheduling method as described in the above aspect.

According to an aspect of the present disclosure, a network device is provided. The network device includes: a processor; a transceiver connected to the processor; and a memory for storing one or more executable instructions of the processor; wherein the processor, when loading and executing the one or more executable instructions, is caused to perform the scheduling method as described in the above aspect.

According to an aspect of the present disclosure, a computer-readable storage medium is provided. The computer-readable storage medium is configured to store one or more executable instructions. The one or more executable instructions, when loaded and executed by a processor, causes the processor to perform the scheduling method as described in the above aspects.

According to an aspect of the present disclosure, a computer program product is provided. The computer program product includes one or more computer instructions. The one or more computer instructions are stored in a computer-readable storage medium. The one or more computer instructions, when read by a processor of a computer device from the computer-readable storage medium and executed by the processor, cause the computer device to perform the scheduling method as described in the above aspects.

According to an aspect of the present disclosure, a chip is provided. The chip includes a programmable logic circuit and/or one or more program instructions. The chip, when running, is configured to perform the scheduling method as described in the above aspects.

According to an aspect of the present disclosure, a computer program is provided. The computer program includes one or more computer instructions. The one or more computer instructions, when executed by a processor of a computer device, cause the computer device to perform the scheduling method as described in the above aspects.

The technical solutions according to the embodiments of the present disclosure achieve the following beneficial effects.

Because scheduling of physical channels or cells is realized based on the first signaling and the second signaling, the total number of bits in the first signaling and the second signaling may exceed the coding capacity of single signaling in the related art, thereby enabling simultaneous scheduling of more physical channels or cells and improving scheduling efficiency. Furthermore, because the first quantity has been indicated by the first signaling, upon receiving the second signaling, the terminal device may not only determine whether the received second signaling has reached the first quantity, thereby improving reliability; but also stop blind detection upon receiving the first quantity of second signalings, thereby avoiding a waste of power consumption caused by meaningless blind detection.

### BRIEF DESCRIPTION OF DRAWINGS

For clearer illustration of the technical solutions in the embodiments of the present disclosure, the accompanying drawings required to be used in the description of the embodiments are briefly introduced hereinafter. It is apparent that the accompanying drawings in the description hereinafter are only for some embodiments of the present disclosure, and for those of ordinary skill in the art, other accompanying drawings can be acquired according to the accompanying drawings without creative efforts.
FIG. 1 is a schematic diagram of a mobile communication system according to some embodiments of the present disclosure;
FIG. 2 is a flowchart of a scheduling method according to some embodiments of the present disclosure;
FIG. 3 is a schematic diagram of a time-domain relationship between a first signaling and a second signaling according to some embodiments of the present disclosure;
FIG. 4 is a schematic diagram of a time-domain between a first signaling and a second signaling according to some embodiments of the present disclosure;
FIG. 5 is a schematic diagram of an association between a first signaling and a second signaling according to some embodiments of the present disclosure;
FIG. 6 is a schematic diagram of an association between a first signaling and a second signaling according to some embodiments of the present disclosure;
FIG. 7 is a schematic diagram of an association between a first signaling and a second signaling according to some embodiments of the present disclosure;
FIG. 8 is a flowchart of a scheduling method according to some embodiments of the present disclosure;
FIG. 9 is a flowchart of a scheduling method according to some embodiments of the present disclosure;
FIG. 10 is a flowchart of a scheduling method according to some embodiments of the present disclosure;
FIG. 11 is a structural block diagram of a scheduling apparatus according to some embodiments of the present disclosure;
FIG. 12 is a structural block diagram of a scheduling apparatus according to some embodiments of the present disclosure; and
FIG. 13 is a structural block diagram of a communication device according to some embodiments of the present disclosure.

### DETAILED DESCRIPTION

For clearer descriptions of the objectives, technical solutions, and advantages of the present disclosure, embodiments of the present disclosure are further described in detail hereinafter with reference to the accompanying drawings. Reference is made in detail to the embodiments, examples of which are illustrated in the accompanying drawings. When the following description refers to the accompanying drawings, same numbers in different accompanying drawings represent same or similar elements unless otherwise indicated. The embodiments described in the following embodiments do not represent all embodiments consistent with the present disclosure. Rather, these embodiments are merely examples of apparatus and methods consistent with some aspects of the present disclosure.

Terms used in the present disclosure are for the purpose of describing particular embodiments only and are not intended to be limiting to the present disclosure. As used in the present disclosure and the appended claims, the singular forms "a," "an," and "the" are intended to include the plural forms as well, unless the context clearly indicates otherwise. It should also be understood that the term "and/or" used herein refers to and encompasses any or all possible combinations of one or more associated listed items.

It should be understood that although the terms "first," "second," or the like may be used herein to describe various information, such information should not be limited to these terms. These terms are only used to distinguish one type of information from another. For example, first information may be referred to as second information, and similarly, second information may be referred to as first information, without departing from the scope of the present disclosure. The words "if" and "when," as used herein, may be interpreted as "in a case that", "in a case where", or "in response to determining that", depending on the context.

An introduction to the related arts involved in the embodiments of the disclosure is provided.

### 1) Multi-Carrier Scheduling:

In the "Multi-Carrier" project, support is provided for simultaneously scheduling of a plurality of physical downlink shared channels (PDSCHs)/physical uplink shared channels (PUSCHs) over single downlink control information (DCI) (e.g., DCI format 0_3 or DCI format 1_3). The scheduled plurality of PDSCHs/PUSCHs can be transmitted in different cells.

Information fields in the DCI that supports simultaneous scheduling of the plurality of physical channels can be roughly categorized into three categories:
1. Type-1 field: The Type-1 field is used to indicate common information. The DCI only includes one Type-1 field, and all cells scheduled by the DCI use the common information indicated by the Type-1 field.
2. Type-2 field: The Type-2 field is used to indicate dedicate information of each scheduled cell. The DCI may include one or more Type-2 fields, wherein each of the one or more Type-2 fields corresponds to one scheduled cell.
3. Type-3 field: The Type-3 field may be configured as the Type-1 field or the Type-2 field. The Type-3 field may also be used to indicate information such as precoding information and the number of layers, antenna ports, or the like.

### 2) Physical Downlink Control Channel (PDCCH) Coding Rule:

In the related arts, the DCI carried by the PDCCH is transmitted based on Polar coding.

A cyclic redundancy check (CRC) encoder used in Polar coding is a linear encoder, and a systematic code is generated. Therefore, the CRC encoder may be considered a generator matrix, and CRC bits are generated by multiplying information bits by the generator matrix. Subsequent to generating the CRC bits, a bit stream, acquired by cascading the information bits and CRC bits, is interleaved, such that a part of the CRC bits previous being at the end of the bit stream is shifted to be prior to the information bits, and the information bits are positioned prior to the CRC bits with which a check relationship is present therebetween. In this way, a decoded part of the information bits may be subjected to a CRC check during decoding. In a case where the check fails, decoding is stopped, such that an early stopping function is realized. Therefore, cascading an interleaver subsequent to the CRC encoder is essential.

The maximum interleaving length supported by the interleaving matrix in the related arts is 164 bits. That is, in the related arts, the total number of DCI bits and CRC bits carried by the PDCCH must not exceed 164 bits. Generally, the CRC bit length is fixed at 24 bits, such that the DCI information bits do not exceed 140 bits. However, it should be noted that the limit on the number of information bits may vary in different communication systems and is not limited to the DCI information bit upper limit of 140 bits.

In the related arts, although up to 16 cells are supported for aggregation, one DCI is only capable of scheduling the physical channels in four cells at most.

Obviously, in a case where a single piece of DCI is used to schedule more cells simultaneously, the following advantages may not be ignored:
- Reduced user equipment (UE) power consumption: The more cells one piece of DCI schedules, the fewer pieces of DCI the UE needs to monitor, such that the total number of blind detections is reduced.
- Reduced signaling overhead and improved transmission efficiency: When one DCI schedules more cells, more scheduled cells share the Type-1 field and CRC bits in the DCI, such that the total amount of information required to schedule a plurality of cells is reduced and the transmission resources required to schedule the plurality of cells are reduced.

However, for scheduling more cells using a single piece of DCI inevitably requires, more Type-2 fields in the DCI need to be supported, and thus the total number of DCI information bits exceeds 140 bits, which violates the coding rules. Therefore, the capacity of the Polar code is a significant factor restricting the number of cells that are simultaneously schedulable by the single piece of DCI.

Based on the above issues, the present disclosure provides a scheduling method that supports simultaneous scheduling of a plurality of cells under coding capacity constraints, thereby effectively reducing UE power consumption, reducing signaling overhead, and improving the efficiency of transmission resource utilization.

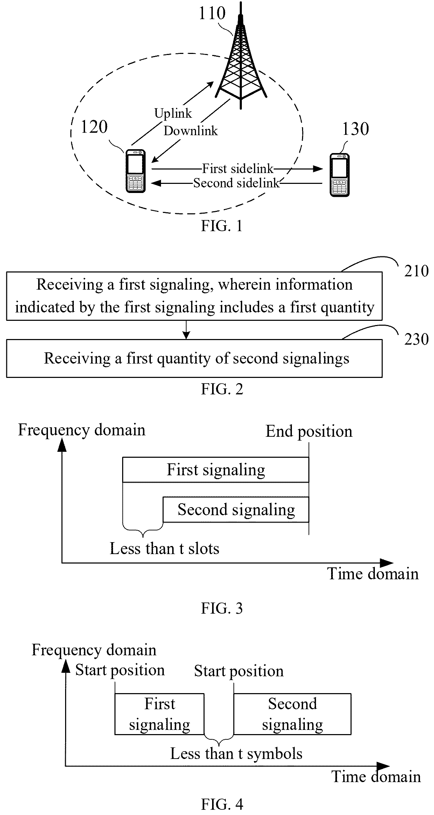

FIG. 1 illustrates a schematic diagram of a mobile communication system according to some embodiments of the present disclosure. The mobile communication system includes a network device 110 and a terminal device 120, and may or may not include a terminal device 130, which is not limited in the present disclosure.

The network device 110 in the present disclosure provides wireless communication functions. The network device includes but not limited to: an evolved Node-B (eNB), a radio network controller (RNC), a Node-B (NB), a base station controller (BSC), a base transceiver station (BTS), a home base station (e.g., a home evolved Node-B , or a home Node-B , HNB), a baseband unit (BBU), an access point (AP) in a wireless fidelity (Wi-Fi) system, a wireless relay node, a wireless backhaul node, a transmission point (TP) or a transmission and reception point (TRP), or the like. It may also be a next generation Node-B (gNB) or a transmission reception point (a TRP or a TP) in a 5^{th} generation (5G) mobile communication system, or one or a set of antenna panels (including a plurality of antenna panels) of a base station in the 5G system, or a network node constituting a gNB or a transmission point, such as a baseband unit (BBU) or a distributed unit (DU), or the like, or a base station in a beyond 5th generation (B5G), a 6^{th} generation (6G) mobile communication system, or the like, or a core network (CN), a fronthaul, a backhaul, a radio access network (RAN), a network slice, or the like, or a serving cell, a primary cell (PCell), a primary secondary cell (PSCell), a special Cell (SpCell), a secondary cell (SCell), a neighbor cell, or the like, of the terminal device.

The terminal device 120 in the present disclosure is also known as a UE, an access terminal, a user unit, a user station, a mobile station, a mobile terminal, a remote station, a remote terminal, a mobile device, a user terminal, a terminal, a wireless communication device, a user agent, a user device. The terminal includes but is not limited to: a handheld device, a wearable device, an in-vehicle device, an Internet of things device, or the like, such as: a mobile phone, a tablet, an e-book reader, a laptop, a desktop computer, a television, a game console, a mobile Internet device (MID), an augmented reality (AR) terminal, a virtual reality (VR) terminal, and a mixed reality (MR) terminal, an extended reality (XR) terminal, a baffle reality (BR) terminal, a cinematic reality (CR) terminal, a deceive reality (DR) terminal, a wearable device, a handle, an electronic tag, a controller, a wireless terminal in industrial control, a wireless terminal in self-driving, a wireless terminal in remote medical, a wireless terminal in smart grid, a wireless terminal in transportation safety, a wireless terminal in smart city, a wireless terminal in smart home, a wireless terminal in remote medical surgery, a cellular phone, a cordless phone, a Session Initiation Protocol (SIP) phone, a wireless local loop (WLL) station, a personal digital assistant (PDA), a set-top box (STB), a customer premises equipment (CPE), or the like.

The network device 110 and the terminal device 120 communicate with each other using an air interface technology, such as a Uu interface.

In some embodiments, two communication scenarios are present between the network device 110 and the terminal device 120: an uplink communication scenario and a downlink communication scenario. The uplink communication, also referred to as an uplink transmission, refers to transmitting signals to the network device 110; and the downlink communication, also referred to as a downlink transmission, refers to transmitting signals to the terminal device 120.

The terminal device 120 and the terminal device 130 communicate with each other using an air interface technology, such as a Uu interface.

In some embodiments, two communication scenarios are present between the terminal device 120 and the terminal device 130: a first sidelink communication scenario and a second sidelink communication scenario. The first sidelink communication refers to transmitting signals to the terminal device 130; and the second sidelink communication refers to transmitting signals to the terminal device 120.

Both the terminal device 120 and the terminal device 130 are within a network coverage and located in the same cell; or both the terminal device 120 and the terminal device 130 are within the network coverage but located in different cells; or the terminal device 120 is within the network coverage, but the terminal device 130 is outside the network coverage.

The technical solutions according to the embodiments of the present disclosure may be applied to various communication systems, such as: a global system of mobile communication (GSM) system, a code-division multiple access (CDMA) system, a wideband code-division multiple access (WCDMA) system, a general packet radio service (GPRS) system, a long-term evolution (LTE) system, an LTE frequency division duplex (FDD) system, an LTE time division duplex (TDD) system, an advanced long-term evolution (LTE-A) system, a universal mobile telecommunication system (UMTS), a worldwide interoperability for microwave access (WiMAX) communication system, a 5G mobile communication system, a new radio (NR) system, an evolved system of the NR system, an LTE-based access to unlicensed spectrum (LTE-U) system, an NR-based access to unlicensed spectrum (NR-U) system, a terrestrial network (TN) system, a non-terrestrial network (NTN) system, a wireless local area network (WLAN) system, a wireless fidelity (Wi-Fi) system, a cellular Internet of things (IoT) system, a cellular passive Internet of things system, and may also be applied to the subsequent evolution systems of 5G NR system, and may also be applied to B5G, 6G, and subsequent evolution systems. In some embodiments of the present disclosure, "NR" may also be referred to as 5G NR system or 5G system. Among them, the 5G mobile communication system may include non-standalone (NSA) and/or standalone (SA).

The technical solutions provided by the embodiments of the present disclosure may also be applied to a machine-type communications (MTC), a long-term evolution-machine (LTE-M), a device-to-device (D2D) network, a machine-to-machine (M2M) network, an IoT network, or other networks. The IoT network may include an Internet of vehicles. The communication methods in the Internet of vehicles system are collectively referred to as vehicle-to-X (V2X, X represents anything). For example, the V2X may include: vehicle-to-vehicle (V2V) communications, vehicle-to-infrastructure (V2I) communications, vehicle-to-pedestrian (V2P) communications, vehicle-to-network (V2N) communications, or the like.

The mobile communication system according to the embodiments of the present disclosure is applicable to, but is not limited to, at least one of: an uplink communication scenario, a downlink communication scenario, or a sidelink communication scenario.

It should be understood that in some embodiments of the present disclosure, a cell and a carrier may be equivalent. For example, "N cells" may be replaced by "N carriers," "at least one cell" may be replaced by "at least one carrier," "an unscheduled cell" may be replaced by "an unscheduled carrier," and "a scheduled cell" may be replaced by "a scheduled carrier," and so on.

It should be understood that in one scheduling, in a case where one physical channel is scheduled on each cell or carrier, then "N cells" may also be understood as "N physical channels."

FIG. 2 illustrates a flowchart of a scheduling method according to some embodiments of the present disclosure. The method is illustrated by the example of terminal device 120 illustrated in FIG. 1. The method includes at least some of the following processes.

**In process 210,** the terminal device receives a first signaling, wherein information indicated by the first signaling includes a first quantity.

The first signaling is originated from a network device, and the first quantity is an integer greater than or equal to 0.

In some embodiments, the first quantity corresponds to a count of second signalings that the network device expects the terminal device to receive; or the first quantity corresponds to a count of second signalings that the network device instructs the terminal device to receive; or the first quantity corresponds to a count of second signalings that the terminal device needs to receive; or the first quantity corresponds to a count of second signalings transmitted by the network device to the terminal device; or the first quantity corresponds to a count of second signalings associated with the first signaling.

The second signalings associated with the first signaling may be understood as second signalings used in conjunction with the first signaling; or as second signalings used together with the first signaling to schedule a second quantity of physical channels or cells.

The physical channels include at least one of a PDSCH, a PUSCH, a physical uplink control channel (PUCCH), a physical sidelink share channel (PSSCH), a physical sidelink control channel (PSCCH), or the like.

In some embodiments, the first quantity is explicitly indicated by the first signaling, or the first quantity is implicitly indicated by the first signaling.

In some embodiments, the specific implicit indication may be determined in a communication protocol, configured by the network device, or determined by a negotiation between the network device and the terminal device.

In some embodiments, the first signaling is referred to as a basic signaling, a primary signaling, a first-level signaling, a level-0 signaling, or the like.

**In process 230,** the terminal device receives a first quantity of second signalings.

The second signaling is originated from the network device.

In some embodiments, the second signaling is also referred to as an extended signaling, a slave signaling, a secondary signaling, an i^{th}-level signaling, or the like.

In some embodiments, each of the first signaling and the second signaling may be understood as a control signaling, a scheduling signaling, or an authorization signaling. In some embodiments, in an uplink or downlink transmission scenario, at least one of the first signaling or the second signaling is DCI; and in a sidelink transmission scenario, at least one of the first signaling or the second signaling is sidelink control information (SCI).

The first signaling and the second signaling are configured to schedule a second quantity of physical channels or cells, wherein the second quantity is a positive integer. That is, the number of scheduled physical channels or scheduled cells is the second quantity.

In some embodiments, the first quantity being equal to 0 indicates that the number of second signalings is 0, and the terminal device receives zero second signaling. Alternatively, in a case where the first quantity is equal to 0, the terminal device does not receive the second signaling. Alternatively, in a case where the first quantity is equal to 0, the terminal device does not perform blind detection on the second signaling.

In some embodiments, the terminal device receives the first signaling and the second signaling. Based on the first quantity indicated by the first signaling, the terminal device may determine whether the number of received second signaling meets the first quantity, that is, whether the received second signaling are complete, thereby improving reliability.

In some embodiments, in a case where the terminal device determines, based on the first quantity, that the number of received second signaling is less than the first quantity, the second signaling is lost. The terminal device transmits feedback information to the network device, and the network device retransmits the lost second signaling based on the feedback information.

In some embodiments, the terminal device receives the first signaling first and then the second signaling. Based on the first quantity indicated by the first signaling, the terminal device may determine whether the quantity of received second signaling reaches the first quantity. In a case where the quantity of received second signalings is equal to the first quantity, the terminal device stops performing the blind detection on the second signaling, thereby reducing the number of meaningless blind detections and reducing power consumption of the terminal device.

In some embodiments, the information indicated by the first signaling is partially overlapped with the information indicated by the second signaling; or the information indicated by the first signaling is different from the information indicated by the second signaling.

In some embodiments, the format of the first signaling is different from the format of the second signaling, that is, the information fields in the first signaling are different from the information fields in the second signaling. The fact that the information fields in the first signaling are different from the information fields in the second signaling may be understood as that at least one information field in the first signaling is different from at least one information field in the second signaling in number or function.

In some embodiments, scheduling information for one of the second quantity of physical channels is carried by one first signaling, or by one second signaling, or by one first signaling and one second signaling, or by a plurality of second signalings, or by one first signaling and a plurality of second signalings.

In some embodiments, scheduling information for one of the second quantity of cells is carried by one first signaling, or by one second signaling, or by one first signaling and one second signaling, or by a plurality of second signalings, or by one first signaling and a plurality of second signalings.

In some embodiments, scheduling information for some of the second quantity of physical channels is carried by the first signaling, or by the second signaling, or by the first signaling and the second signaling.

In some embodiments, scheduling information for all of the second quantity of physical channels is carried by the first signaling, or by the second signaling, or by the first signaling and the second signaling.

In some embodiments, scheduling information for some of the second quantity of cells is carried by the first signaling, or by the second signaling, or by the first signaling and the second signaling.

In some embodiments, scheduling information for all of the second quantity of cells is carried by the first signaling, or by the second signaling, or by the first signaling and the second signaling.

It should be understood that in the embodiments of the present disclosure, transmission can be understood as transmitting, receiving, or both.

In summary, in the methods according to the embodiments of the present disclosure, because scheduling of physical channels or cells is achieved based on both the first signaling and the second signaling, the total number of bits of the first signaling and the second signaling may exceed the coding capacity of a single signaling in the related arts, thereby enabling simultaneous scheduling of more physical channels or cells and improving scheduling efficiency. Furthermore, because the first quantity has been indicated by the first signaling, upon receiving the second signaling, the terminal device may not only determine whether the received second signaling reaches the first quantity, thereby improving reliability; but also stop the blind detection upon receiving the first quantity of second signalings, thereby avoiding a waste of power consumption caused by meaningless blind detection. In addition, during scheduling of the second quantity of physical channels or cells using the first signaling and the second signaling, in the case where the first signaling and the second signaling include common information corresponding to the scheduled physical channels or cells, then the greater the value of the second quantity, the higher the usage efficiency of the transmission resources corresponding to the first signaling and the second signaling.

Based on the embodiments illustrated in FIG. 2, five aspects are introduced, which are contents respectively related to the first quantity, the first signaling, the second signaling, a physical resource relationship between the first signaling and the second signaling, and an association between the first signaling and the second signaling.

### I. Contents related to the first quantity

In some embodiments, a value of the first quantity is correlated to a value of the second quantity. Alternatively, the maximum value of the first quantity is determined based on first configuration information. Alternatively, the maximum value of the first quantity is determined in a communication protocol. Alternatively, the value of the first quantity is correlated to the value of the second quantity, and the maximum value of the first quantity is determined based on the first configuration information. Alternatively, the value of the first quantity is correlated to the value of the second quantity, and the maximum value of the first quantity is determined in the communication protocol.

### 1. Value of the first quantity

In some embodiments, the value of the first quantity is correlated to the value of the second quantity. In the embodiments of this disclosure, the following two types of relationships are primarily discussed, but not intended to limit the relationships between the values of the first quantity and the second quantity:
First type of relationship: The value of the first quantity is positively correlated to the value of the second quantity.

That is, the larger the value of the second quantity, the larger the value of the first quantity.

In some embodiments, the values of the first quantity and the second quantity are linearly positively correlated, for example, the values of the first quantity and the second quantity are proportionally positively correlated. Alternatively, the values of the first quantity and the second quantity are non-linearly positively correlated.

Second type of relationship: The value of the first quantity is correlated to a numerical range to which the second quantity belongs.

That is, the value of the first quantity is determined based on the numerical range to which the second quantity belongs.

In some embodiments, in a case where the second quantity belongs to a first numerical range, the value of the first quantity is a first value. The first value is an integer greater than or equal to 0, and the first numerical range corresponds to a maximum value and a minimum value.

In some embodiments, the first numerical range may be understood as a set consisting of a maximum value, a minimum value, and values greater than the minimum value and less than the maximum value.

In some embodiments, the maximum value of the first numerical range is configured by the network device, determined in the communication protocol, or determined by the network device and the terminal device.

In some embodiments, the network device and the terminal device negotiate to determine the maximum value of the first numerical range. In some embodiments, the network device transmits first negotiation information to the terminal device, wherein the first negotiation information is used to indicate that the maximum value of the first numerical range is a value A; the terminal device transmits second negotiation information to the network device, wherein the second negotiation information is used to indicate that the terminal device accepts the maximum value of the first numerical range being the value A; and the network device and the terminal device determine that the maximum value of the first numerical range is the value A. In some embodiments, the network device transmits first negotiation information to the terminal device, wherein the first negotiation information is used to indicate that the maximum value of the first numerical range is a value A; the terminal device transmits second negotiation information to the network device, wherein the second negotiation information is used to indicate that the terminal device refuses to accept the maximum value of the first numerical range being the value A and recommends that the maximum value of the first numerical range being a value B; the network device transmits third negotiation information to the terminal device, wherein the third negotiation information is used to indicate that the network device accepts the maximum value of the first numerical range being the value B; and the network device and the terminal device determine that the maximum value of the first numerical range is the value B.

In some embodiments, the minimum value of the first numerical range is configured by the network device, determined in the communication protocol, or determined by the network device and the terminal device.

In some embodiments, the network device and the terminal device negotiate to determine the minimum value of the first numerical range. In some embodiments, the network device transmits first negotiation information to the terminal device, wherein the first negotiation information is used to indicate that the minimum value of the first numerical range is a value C; the terminal device transmits second negotiation information to the network device, wherein the second negotiation information is used to indicate that the terminal device accepts the minimum value of the first numerical range being the value C; the network device and the terminal device determine that the minimum value of the first numerical range is a value A. In some embodiments, the network device transmits first negotiation information to the terminal device, wherein the first negotiation information is used to indicate that the minimum value of the first numerical range is a value C; the terminal device transmits second negotiation information to the network device, wherein the second negotiation information is used to indicate that the terminal device refuses to accept the minimum value of the first numerical range being the value C and recommends that the minimum value of the first numerical range being a value D; the network device transmits third negotiation information to the terminal device, wherein the third negotiation information is used to indicate that the network device accepts the minimum value of the first numerical range being the value D; and the network device and the terminal device determine that the minimum value of the first numerical range is the value D.

In some embodiments, the number of candidate numerical ranges of the second quantity is at least two. In a case where the second quantity belongs to an i-th range in the candidate numerical ranges, the value of the first quantity is a second value; or in a case where the second quantity belongs to an (i+1)-th range in the candidate numerical ranges, the value of the first quantity is a third value.

The maximum value of the i-th range is less than the minimum value of the (i+1)-th range, the second value is less than the third value, the second value is an integer greater than 0, and the third value is an integer greater than 0.

In some embodiments, the candidate numerical ranges (including the number of candidate numerical ranges and/or the maximum value corresponding to the candidate numerical ranges and/or the minimum value corresponding to the candidate numerical ranges) are configured by the network device, or determined in a communication protocol, or determined by the network device and the terminal device.

In some embodiments, the numerical range to which the second quantity belongs is configured by the network device, or determined in a communication protocol, or determined by the network device and the terminal device.

In some embodiments, the value of the first quantity is configured by the network device, or determined in a communication protocol, or determined by the network device and the terminal device.

It should be understood that in the embodiments of the present disclosure, the first, second, and third numerical ranges are used as examples to illustrate the relationship between the value of the first quantity and the numerical range to which the second quantity belongs, but not limit the numerical range to which the second quantity belongs or the candidate numerical ranges. The candidate numerical ranges of the second quantity may be fewer, such as only the first numerical range or only the first and second numerical ranges; alternatively, the candidate numerical ranges of the second quantity may also be more, such as, in addition to the three numerical ranges mentioned above, there may also be a fourth numerical range, a fifth numerical range, or the like.

It should be understood that the first value, the second value, and the third value may increase arithmetic progressions, proportionally, according to other mathematical rules, or randomly.

In some embodiments, in a case where the second quantity belongs to a numerical range of (0, X], the value of the first quantity is 0; in a case where the second quantity belongs to a numerical range of (X, Y], the value of the first quantity is 1; in a case where the second quantity belongs to a numerical range of (Y, Z], the value of the first quantity is 2; and so forth, wherein X<Y<Z.

In some embodiments, in a case where the second quantity belongs to a numerical range of (0, X], the value of the first quantity is 1; in a case where the second quantity belongs to a numerical range of (X, Y], the value of the first quantity is 2; in a case where the second quantity belongs to a numerical range of (Y, Z], the value of the first quantity is 4; and so forth, wherein X<Y<Z.

**In** some embodiments, a smaller value of the second quantity indicates a smaller number of scheduled physical channels or scheduled cells, and thus, fewer information bits are required for scheduling. The first signaling may carry the complete scheduling information required for the second quantity of physical channels or cells. That is, the first signaling is capable of independently scheduling the second quantity of physical channels or cells. Therefore, the value of the first quantity may be 0, that is, the quantity of second signalings received by the terminal device is 0.

**In** some embodiments, the first signaling is incapable of independently scheduling physical channels or cells, or does not support the first signaling carrying the complete scheduling information required for the second quantity of physical channels or cells, or the first signaling is incapable of carrying the complete scheduling information required for the second quantity of physical channels or cells (possibly due to a lack of independent scheduling capability or coding capacity). That is, scheduling of the second quantity of physical channels or cells needs to be achieved based on the first signaling and the second signaling, or the complete scheduling information required for the second quantity of physical channels or cells consists of the first signaling (partial or complete information included therein) and the second signaling (partial or complete information included therein), then the value of the first quantity must be greater than 0, and the terminal device receives at least one second signaling.

### 2. Maximum value of the first quantity

In some embodiments, the value of the first quantity has an upper limit, that is, the maximum value for the first quantity.

In some embodiments, the maximum value of the first quantity is determined based on first configuration information. The first configuration information is transmitted by the network device. Therefore, the network device may flexibly configure the first quantity or the maximum value of the first quantity based on at least one of an actual scheduling situation, the scheduling capability of the network device itself, the capability of the terminal device, the cell aggregation level, the number of aggregated cells, the transmission resources, or the like, to improve scheduling efficiency and system transmission efficiency.

In some embodiments, the first configuration information is used to configure at least one of the first quantity or the maximum value of the first quantity.

In some embodiments, the first configuration information includes at least one of the following information:
- the maximum number of codewords;
- the number of code block group (CBG);
- a transmission direction;
- time-domain resources; or
- the maximum number of hybrid automatic repeat request (HARQ) processes.

### Description of the maximum number of codewords:

The maximum number of codewords includes at least one of: the maximum number of codewords corresponding to one physical channel (including any one or a certain one of the physical channels) in the second quantity of physical channels, the maximum number of codewords corresponding to each physical channel in the second quantity of physical channels, the maximum number of codewords corresponding to all physical channels in the second quantity of physical channels, the maximum number of codewords corresponding to one cell (including any one or a certain one of the cells) in the second quantity of cells, the maximum number of codewords corresponding to each cell in the second quantity of cells, or the maximum number of codewords corresponding to all cells in the second quantity of cells.

### Description of the number of CBGs:

The number of CBGs includes at least one of: the number of CBGs corresponding to one physical channel (including any one or a certain one of the physical channels) in the second quantity of physical channels, the number of CBGs corresponding to each physical channel in the second quantity of physical channels, the number of CBGs corresponding to all physical channels in the second quantity of physical channels, the number of CBGs corresponding to one cell (including any one or a certain one of the cells) in the second quantity of cells, the number of CBGs corresponding to each cell in the second quantity of cells, or the number of CBGs corresponding to all cells in the second quantity of cells.

### Description of the transmission direction:

Transmission direction, such as an uplink transmission direction, a downlink transmission direction, or a sidelink transmission direction, and further such as PDSCH, PUSCH, or PSSCH. The transmission direction includes at least one of: a transmission direction corresponding to one physical channel (including any one or a certain one of the physical channels) in the second quantity of physical channels, a transmission direction corresponding to each physical channel in the second quantity of physical channels, a transmission direction corresponding to all physical channels in the second quantity of physical channels, a transmission direction corresponding to one cell (including any one or a certain one of the cells) in the second quantity of cells, a transmission direction corresponding to each cell in the second quantity of cells, or a transmission direction corresponding to all cells in the second quantity of cells.

### Description of the time-domain resources:

The time-domain resources include at least one of: the time-domain resources occupied by one physical channel (including any one or a certain one of the physical channels) in the second quantity of physical channels, the time-domain resources occupied by each physical channel in the second quantity of physical channels, the time-domain resources occupied by all physical channels in the second quantity of physical channels, the time-domain resources occupied by one cell (including any one or a certain one of the cells) in the second quantity of cells, the time-domain resources occupied by each cell in the second quantity of cells, or the time-domain resources occupied by all cells in the second quantity of cells.

In some embodiments, the second quantity is 1, and the first configuration information may include at least one piece of the information such as the time-domain resources, the time-domain position, the size of the time-domain resources, or the like, that occupied by the scheduled physical channel (such as PDSCH or PUSCH or PSSCH).

In some embodiments, in a case where the second quantity is greater than 1, the first configuration information may include at least one of: the time-domain resources, time-domain positions, the sizes of the time-domain resources, or the like, that occupied by the second quantity of scheduled physical channels. Some or all of the second quantity of scheduled physical channels may be transmitted within the same cell.

In some embodiments, the second quantity is 1, and the first configuration information may include at least one piece of the information such as the time-domain resources, the time-domain position, the size of the time-domain resources, or the like, that occupied by at least one scheduled physical channel (such as PDSCH or PUSCH or PSSCH) in the scheduled cell.

In some embodiments, in a case where the second quantity is greater than 1, the first configuration information may include at least one of: the time-domain resources, the time-domain position, the size of the time-domain resources, or the like, that occupied by at least one scheduled physical channel in the second quantity of scheduled cells.

In some embodiments, the maximum value of the first quantity is determined in the communication protocol. Alternatively, the maximum value of the first quantity is a default value, such as 16. Alternatively, the maximum value of the first quantity is determined by negotiation between the network device and the terminal device, such as 12.

### Description of the maximum number of HARQ processes:

The maximum number of HARQ processes includes at least one of: the maximum number of HARQ processes configured for the terminal device, the maximum number of HARQ processes determined in a protocol, the maximum number of HARQ processes corresponding to one physical channel (including any one or a certain one of the physical channels) in the second quantity of physical channels, the maximum number of HARQ processes corresponding to each physical channel in the second quantity of physical channels, the maximum number of HARQ processes corresponding to all physical channels in the second quantity of physical channels, the maximum number of HARQ processes corresponding to one cell (including any one or a certain one of the cells) in the second quantity of cells, the maximum number of HARQ processes corresponding to each cell in the second quantity of cells, or the maximum number of HARQ processes corresponding to all cells in the second quantity of cells.

### II. Contents related to the first signaling

In some embodiments, the number of bits in the first signaling is determined based on the maximum value of the first quantity. Alternatively, the number of bits in the first signaling is correlated to the value of the second quantity. Alternatively, the maximum number of bits in the first signaling is determined in the communication protocol. Alternatively, the number of bits in the first signaling is determined based on the maximum value of the first quantity, and the number of bits in the first signaling is correlated to the value of the second quantity. Alternatively, the number of bits in the first signaling is determined based on the maximum value of the first quantity, and the maximum number of bits in the first signaling is determined in the communication protocol. Alternatively, the number of bits in the first signaling is correlated to the value of the second quantity, and the maximum number of bits in the first signaling is determined in the communication protocol. Alternatively, the number of bits in the first signaling is determined based on the maximum value of the first quantity, the number of bits in the first signaling is correlated to the value of the second quantity, and the maximum value of the number of bits in the first signaling is determined in the communication protocol.

### 1. The number of bits in the first signaling

In some embodiments, the number of bits in the first signaling is determined based on the maximum value of the first quantity. Alternatively, the number of bits in the first signaling is correlated to the value of the second quantity, for example, the number of bits in the first signaling is positively correlated to the value of the second quantity, such that the larger the value of the second quantity, the larger the number of bits in the first signaling.

In some embodiments, an upper limit on the number of bits in the first signaling is present, that is, a maximum value for the number of bits in the first signaling is present.

In some embodiments, the maximum value of the number of bits in the first signaling is determined in the communication protocol. Alternatively, the maximum value of the number of bits in the first signaling is configured by the network device, for example, based on at least one of an actual scheduling situation, the scheduling capability of the network device itself, the capability of the terminal device, cell aggregation level, the number of aggregated cells, transmission resources, or the like. Alternatively, the maximum number of bits in the first signaling is set by default, for example, the maximum number of bits in the first signaling is set by default to 140 bits. Alternatively, the maximum number of bits in the first signaling is determined by negotiation between the network device and the terminal device, for example, the maximum number of bits in the first signaling is determined by negotiation as 130 bits.

### 2. Information in the first signaling

In some embodiments, the first signaling includes at least one of first information, second information, or third information.

In some embodiments, the first signaling includes first information; or the first signaling includes first information and second information; or the first signaling includes first information and third information; or the first signaling includes second information; or the first signaling includes third information; or the first signaling includes second information and third information; or the first signaling includes first information, second information, and third information.

### 1) First information

The first information includes signaling parameters of at least one second signaling. The at least one second signaling is at least one of the first quantity of second signalings.

In some embodiments, the signaling parameters of the at least one second signaling include at least one of the following parameters:
- a format of the at least one second signaling;
- a payload of the at least one second signaling;
- physical resource information of the at least one second signaling; or
- transmission parameters of the at least one second signaling.

In some embodiments, the quantity of the second signaling is carried in first information and transmitted, or the quantity of the second signaling is included in the signaling parameters of the at least one second signaling, or the quantity of the second signaling is carried in second information and transmitted.

### Description of the payload:

The payload of the at least one second signaling refers to a value of the payload of the at least one second signaling and/or content of the payload of the at least one second signaling.

In a case where the first signaling includes the first information, wherein the first information includes at least one of the format or payload of the at least one second signaling, then the terminal device may determine which information fields are included in the at least one second signaling and what information is carried therein based on the first information, thereby ensuring that the network device and the terminal device have consistent understanding of the information carried in the at least one second signaling, thereby improving scheduling reliability.

### Description of the physical resource information:

The physical resource information includes at least one of time-domain resource information, frequency-domain resource information, or control channel information.

In some embodiments, time-domain resource information includes at least one of a time-domain unit to which the at least one second signaling belongs, a start symbol occupied by the at least one second signaling, an end symbol occupied by the at least one second signaling, or the number of symbols occupied by the at least one second signaling.

In the embodiments of the present disclosure, a time-domain unit includes at least one of a frame, a subframe, a slot, a mini-slot, a sub-slot, a symbol, a symbol group, or a unit based on another time-domain unit.

In some embodiments, the frequency-domain resource information includes at least one of a start resource block (RB) occupied by the at least one second signaling, a start subcarrier occupied by the at least one second signaling, an end RB occupied by the at least one second signaling, an end subcarrier occupied by the at least one second signaling, the number of RBs occupied by the at least one second signaling, or the number of subcarriers occupied by the at least one second signaling.

In some embodiments, the control channel information includes at least one of a search space identifier, a search space number, an aggregation level, a candidate set identifier, or a candidate set number.

In the case where the first signaling includes the first information, wherein the first information includes the physical resource information of the at least one second signaling, then the terminal device may receive the at least one second signaling on physical resources indicated by the first information, thereby reducing the number of blind detections or even eliminating the blind detection for the at least one second signaling, improving scheduling reliability, and reducing power consumption of the terminal device.

### Description of the transmission parameters:

The transmission parameters include at least one of a coding scheme, a modulation scheme, a coding rate, a reference signal, or a resource mapping scheme.

In some embodiments, some or all signaling parameters of different second signaling are uniformly indicated by the first information. For example, the first information uniformly indicates all signaling parameters of the first quantity of second signalings; for another example, the first information uniformly indicates the format of the first quantity of second signalings; for another example, the first information uniformly indicates that the time-domain unit to which the first quantity of second signalings belongs is "slot 3;" for another example, the first information uniformly indicates that the number of subcarriers occupied by the first quantity of second signalings is 1; and so forth, which are not enumerated herein one by one.

In some embodiments, some or all signaling parameters of different second signaling are respectively indicated by the first information. For example, the first signaling includes m pieces of first information, wherein the m pieces of first information are respectively used to indicate all signaling parameters of the m second signaling, wherein m is a positive integer. For another example, the first signaling uses m pieces of first information to respectively indicate the formats of the m second signaling. For another example, the first signaling uses m pieces of first information to respectively indicate the payloads of the m second signaling. For another example, the first signaling uses m pieces of first information to respectively indicate the start RBs occupied by the m second signaling. The examples are not enumerated herein one by one.

In some embodiments, some or all signaling parameters of different second signaling may be indicated by the first information in a unified or separate manner. For example, the first signaling includes one piece of first information for uniformly indicating the slots to which the m second signaling belongs, and also includes m pieces of first information for respectively indicating the symbols to which the m second signaling belongs. For another example, the first signaling includes one piece of first information for uniformly indicating the number of subcarriers occupied by the m second signaling, and also includes m pieces of first information for respectively indicating the start subcarriers occupied by the m second signaling; and so forth. The examples are not enumerated herein one by one.

### 2) Second Information

The second information includes common information corresponding to the second quantity of physical channels or cells. The common information can be understood as information required for scheduling the second quantity of physical channels or cells, or as scheduling information associated with the second quantity of physical channels or cells.

Therefore, the use or setting of the second information may reduce the total overhead required for scheduling the second quantity of physical channels or cells, thereby effectively improving the usage efficiency of the transmission resources required for scheduling the second quantity of physical channels or cells.

In some embodiments, the second information includes at least one of the following information:

### • Identifier of the first signaling;

In some embodiments, each first signaling has a one-to-one corresponding identifier.

### • An identifier of a format of the first signaling;

In some embodiments, each format of the first signaling has a one-to-one corresponding identifier.

### • Downlink assignment index (DAI);

In some embodiments, a terminal device may determine whether signaling or physical channel loss, reception failure, or the like, is present based on the DAI.

### • Scheduled physical uplink control channel (PUCCH) transmit power control (TPC);

In some embodiments, the scheduled PUCCH refers to the PUCCH scheduled by both the first signaling and the second signaling. Alternatively, the scheduled PUCCH refers to the PUCCH used by the terminal device for HARQ-acknowledgement (ACK) feedback upon receiving at least one of the first signaling or the second signaling.

The terminal device may use the TPC indicated by the second information to transmit on the scheduled PUCCH.

### • PUCCH resource indicator;

In some embodiments, the PUCCH resource indicator is used to indicate the physical resource information of the PUCCH scheduled by the first signaling and the second signaling. Alternatively, the PUCCH resource indicator is used to indicate the physical resource information of the PUCCH used by the terminal device for HARQ-ACK feedback upon receiving at least one of the first signaling or the second signaling.

### • PDSCH-to-HARQ timing indicator;

The PDSCH to HARQ timing indicator is used to indicate an interval between the time-domain unit to which the PDSCH belongs and a time-domain unit to which the HARQ-ACK feedback corresponding to the PDSCH belongs; or the PDSCH to HARQ timing indicator is used to indicate a time-domain unit offset value (such as a slot offset value) between the PDSCH and a physical channel (such as PUCCH or PUSCH) used by the HARQ-ACK corresponding to the PDSCH.

### • One-shot HARQ-ACK request;

The terminal device may generate or not generate a Type 3/enhanced Type 3 HARQ-ACK codebook based on a value of an information field in the one-short HARQ-ACK request.

### • Time-domain resource allocation (TDRA) information;

The TDRA information is used to indicate a time-domain resource allocation for the second quantity of physical channels or cells scheduled by the first signaling and second signaling.

### • Priority indicator;

In some embodiments, the priority indicator is used to indicate a priority of the first signaling, scheduling priorities of the first signaling and the second signaling, a priority of a current signaling transmission, priorities of the scheduled cells, or priorities of the scheduled physical channels.

### • Indicator of the second quantity of cells;

The indicator of the second quantity of cells may be understood as an indicator of the cells co-scheduled this time, that is, an indicator corresponding to the second quantity of cells scheduled by the first signaling and the second signaling. The indicator of the second quantity of cells is used to indicate which cells are scheduled by the first signaling and the second signaling.

### • Open-loop power control parameter set indication.

The open-loop power control parameter indication is used to indicate open-loop power control parameters of the second quantity of physical channels or cell scheduled by the first signaling and the second signaling.

### 3) Third Information

The third information includes scheduling information (e.g., transmission parameters) of at least one of the second quantity of physical channels, or scheduling information (e.g., transmission parameters) of at least one of the second quantity of cells.

In some embodiments, the third information includes at least one of:
- a frequency-domain resource allocation for a first physical channel;
- an HARQ process number carried by the first physical channel;
- a modulation and coding scheme (MCS) for the first physical channel;
- a new data indicator for each transport block (TB);
- a redundancy version for each TB; or
- a time-domain resource allocation for the first physical channel;
wherein first physical channel is at least one physical channel in the second quantity of physical channels, or at least one physical channel transmitted within the second quantity of cells.

In some embodiments, whether the first signaling includes the third information is configured by the network device, such that scheduling flexibility is enhances.

In some embodiments, the network device configures the third information based on at least one of an actual scheduling situation, the scheduling capability of the network device itself, the capability of the terminal device, the cell aggregation level, the number of aggregated cells, transmission resources, the value of the first quantity, the value of the second quantity, or a quality of service class identifier (QCI), thereby improving scheduling reliability and system efficiency.

In some embodiments, the network device uniformly configures scheduling information for the second quantity of physical channels or the second quantity of cells over third information, thereby improving system efficiency.

In some embodiments, the network device respectively configures scheduling information for each physical channel in the second quantity of physical channels or each cell in the second quantity of cells over third information, thereby improving scheduling flexibility, reliability, and system efficiency.

In some embodiments, the first signaling is the DCI.

In some embodiments, the format of the first signaling includes one of DCI format 0-0, DCI format 0-1, DCI format 0-2, DCI format 0-3, DCI format 1-0, DCI format 1-1, DCI format 1-2, or DCI format 1-3. In some embodiments, the first signaling is one of the above formats, and the first signaling includes the first information.

In some embodiments, the first signaling is transmitted in a DCI transmission manner in the related arts. For example, the first signaling is transmitted in a DCI transmission manner in the communication protocol of Release 18 (R18) of the 3rd Generation Partnership Project (3GPP). In another example, the first signaling is transmitted in a DCI transmission manner in a communication protocol of a future version of 3GPP.

In some embodiments, the first signaling is transmitted using a PDCCH physical layer mechanism in the related arts. For example, the first signaling is transmitted using a PDCCH physical layer mechanism in the communication protocol of the 3GPP R18. For another example, the first signaling is transmitted using a PDCCH physical layer mechanism in a communication protocol of a future version of the 3GPP.

In some embodiments, the first signaling transmission is performed based on at least one of a coding scheme for the PDCCH, a modulation scheme for the PDCCH, a resource mapping scheme for the PDCCH, or a physical channel structure of the PDCCH.

In some embodiments, the modulation scheme for the first signaling is quadrature phase shift keying (QPSK).

In some embodiments, the coding scheme for the first signaling is Polar coding.

In some embodiments, the resource mapping scheme for the first signaling is interleaved mapping or non-interleaved mapping.

In some embodiments, the transmission resources occupied by the first signaling include at least one of a time-frequency position of a control resource set (CORESET), a PDCCH aggregation level, a search space aggregation level, or the number of control channel elements (CCEs).

### III. Contents related to the second signaling

### 1. The number of bits in the second signaling

In some embodiments, the number of bits in the second signaling is determined based on the maximum value of the second quantity. Alternatively, the number of bits in the second signaling is correlated to the value of the second quantity, for example, the number of bits in the second signaling is positively correlated to the value of the second quantity, wherein the larger the value of the second quantity, the larger the number of bits in the second signaling. Alternatively, the sum of the number of bits in the first signaling and the number of bits in the second signaling is correlated to the value of the second quantity, for example, the sum of the number of bits in the first signaling and the number of bits in the second signaling is positively correlated to the value of the second quantity.

In some embodiments, the number of bits in the second signaling is correlated to the number of bits in the first signaling. In some embodiments, in a case where the second quantities are the same, the number of bits in the second signaling when the first signaling does not include the third information is greater than the number of bits in the second signaling when the first signaling includes the third information. In some embodiments, in a case where the second quantities are the same, the greater the number of bits of the third information in the first signaling, the smaller the number of bits in the second signaling.

In some embodiments, an upper limit to the number of bits in the second signaling is present, that is, a maximum value for the number of bits in the second signaling is present.

In some embodiments, the maximum number of bits in the second signaling is determined in the communication protocol. Alternatively, the maximum number of bits in the second signaling is configured by the network device, for example, based on at least one of an actual scheduling situation, the scheduling capability of the network device itself, the capability of the terminal device, the cell aggregation level, the number of aggregated cells, or transmission resources. Alternatively, the maximum number of bits in the second signaling is a default value. Alternatively, the maximum number of bits in the second signaling is determined by negotiation between the network device and the terminal device.

### 2. Information in the second signaling

In some embodiments, the second signaling includes at least one of the following information:

### • Identification information of the second signaling;

The identification information includes at least one of an identifier, an index, a number, or a value.

In some embodiments, the identification information of the second signaling may be used to identify the number or index of the current second signaling within the first quantity of second signalings.

In some embodiments, each second signaling has one-to-one corresponding identification information, and the second signaling includes its own corresponding identification information.

In some embodiments, the second signaling includes identification information of the first quantity of second signalings (i.e., identification information of all second signaling).

In some embodiments, the second signaling includes at least one of identification information of the current second signaling (i.e., identification information) or identification information of other second signaling. The other second signaling refers to at least one other second signaling in the first quantity of second signalings, excluding the current second signaling.

In a case where the second signaling includes identification information of the second signaling, the terminal device may, based on this information, determine which information fields the current second signaling includes, such as whether the current second signaling includes physical resource information of other second signaling, the number of other second signaling, the format information of other second signaling, or the like, thereby improving scheduling reliability and system efficiency.

In a case where the second signaling includes identification information of the second signaling, the terminal device may, based on this information, determine an association between the current second signaling and other second signaling. In some embodiments, at least one of the physical resource information of the current second signaling, the number of other second signaling, or the format information of other second signaling is indicated by the other second signaling. For example, the current second signaling indicates at least one of physical resource information of other second signaling, the number information of other second signaling, or the format information of other second signaling, thereby improving scheduling reliability and system efficiency.

In a case where the second signaling includes the identification information of the second signaling, the terminal device may, based on this information, determine which physical channels, or which physical channel, or which cells, or which cell, the current second signaling is used to schedule. That is, the terminal device may, based on this information, determine: a corresponding relationship between the current second signaling and some or all of the second quantity of physical channels; or a corresponding relationship between the current second signaling and some or all of the second quantity of cells, thereby improving scheduling reliability and system efficiency.

In a case where the second signaling includes the identification information of the second signaling, the terminal device may, based on this information, determine the number of received second signaling. Furthermore, by comparing with the first quantity indicated by the first signaling, the terminal device can determine whether the terminal device has received the first quantity of second signalings. In a case where the first quantity of second signalings has been received (i.e., all second signaling have been received), the terminal device stops performing blind detection on the second signaling, thereby reducing power consumption and improving scheduling efficiency. Alternatively, by comparing with the first quantity indicated by the first signaling, the terminal device may determine whether any second signaling has been lost or failed to be received, thereby improving system reliability.

### • Identification information of the first signaling;

In a case where the second signaling includes identification information of the first signaling, the terminal device may, based on this information, determine the first signaling associated with the current second signaling, i.e., determine which first signaling the current second signaling is used in conjunction with.

### • Identification information of at least one of the second quantity of physical channels;

That is, identification information of at least one physical channel scheduled by the current second signaling. That is, identification information of the scheduled physical channel corresponding to the current second signaling.

In a case where the second signaling includes identification information of at least one of the second quantity of physical channels, the terminal device may determine, based on this information, that the current second signaling is used to schedule the at least one physical channel corresponding to the identification information, or that the current second signaling may schedule the at least one physical channel corresponding to the identification information.

### • Identification information of at least one of the second quantity of cells;

That is, identification information of at least one cell scheduled by the current second signaling. That is, identification information of the scheduled cell corresponding to the current second signaling.

In a case where the second signaling includes identification information of at least one of the second quantity of cells, the terminal device may determine, based on this information, that the current second signaling is used to schedule one or more cells corresponding to the identification information, or that the current second signaling may schedule the one or more cells corresponding to the identification information.

### • First information, wherein the first information includes signaling parameters of at least one second signaling, the at least one second signaling being at least one of the first quantity of second signalings;

For details about the first information, reference may be made to the preceding content and will not be elaborated herein any further.

In a case where the second signaling includes the first information, the current second signaling may be used to indicate signaling parameters of other second signaling. The other second signaling refers to at least one other second signaling in the first quantity of second signalings, excluding the current second signaling. Therefore, the terminal device may receive the other second signaling based on the first information included in the second signaling, thereby reducing the number of blind detections by the terminal device, reducing power consumption, and improving scheduling reliability and transmission efficiency.

### • Third information, wherein the third information includes scheduling information (e.g., transmission parameters) for at least one of the second quantity of physical channels, or scheduling information (e.g., transmission parameters) for at least one of the second quantity of cells.

For details about the third information, reference may be made to the preceding content and will not be elaborated herein any further.

In some embodiments, the network device configures the third information in the second signaling based on at least one of an actual scheduling situation, the scheduling capability of the network device itself, the capability of the terminal device, the cell aggregation level, the number of aggregated cells, the transmission resources, the value of the first quantity, the value of the second quantity, or a QCI, thereby improving scheduling reliability and system efficiency.

In some embodiments, the network device uses the third information in the second signaling to uniformly configure scheduling information for the scheduled physical channels or scheduled cells corresponding to the second signaling, thereby improving system efficiency.

In some embodiments, the network device uses the third information in the second signaling to respectively configure scheduling information for each scheduled physical channel or scheduled cell corresponding to the second signaling, thereby improving scheduling flexibility, reliability, and system efficiency.

In some embodiments, the complete scheduling information for one scheduled physical channel or cell is carried by a plurality of second signalings, or by one first signaling and a plurality of second signalings. The plurality of second signalings may carry different parts of the complete scheduling information. That is, the information in the plurality of second signalings used to schedule the same physical channel or cell may be different. The information in each of the second signalings may be respectively configured or set, such that the scheduling information in each second signaling is more refined, flexible, and richer, thereby enhancing scheduling flexibility.

In some embodiments, the second signaling is the DCI.

In some embodiments, the second signaling is transmitted based on at least one of a coding scheme for the PDCCH, a modulation scheme for the PDCCH, a resource mapping scheme for the PDCCH, or a physical channel structure of the PDCCH.

In some embodiments, the second signaling is transmitted based on at least one of a physical channel structure of the PDSCH or a reference signal structure of the PDSCH.

In some embodiments, the second signaling is transmitted based on Polar coding, low-density parity check (LDPC) coding, or Reed-Muller (RM) coding.

In some embodiments, the channel coding scheme adopted by the channel carrying the second signaling is a Polar coding scheme, and reference may be made to Section 5.3.1 of 3GPP TS 38.212 V15.11.0 (2021-06) . Alternatively, the channel coding scheme adopted by the channel carrying the second signaling is the LDPC coding scheme, and reference may be made to the relevant content in Section 5.3.2 of 3GPP TS 38.212 V15.11.0 (2021-06). Alternatively, the channel coding scheme adopted by the channel carrying the second signaling is the RM coding scheme, and reference may be made to the relevant content in Section 5.3.3 of 3GPP TS 38.212 V15.11.0 (2021-06).

In some embodiments, the payloads of different second signaling are the same or different. In some embodiments, the number of payloads of different second signaling are different, or the number of payloads of different second signaling are the same. In some embodiments, the contents of the payloads of different second signaling are completely different, or the contents of the payloads of different second signaling are partially the same.

In some embodiments, at least one of the payload of the second signaling or the maximum value of the payload of the second signaling is determined based on at least one of the following:
- second configuration information, wherein the second configuration information is used to configure at least one of the payload of the second signaling or the maximum value of the payload of the second signaling;
- the number of physical resource blocks (PRBs) of at least one cell in the aggregated cell corresponding to the second quantity of physical channels or cells;
- the number of CBGs of at least one of the aggregated cells;
- the number of codewords of at least one cell in the aggregated cells; or
- precoding information of at least one cell in the aggregated cells.

The second configuration information is transmitted by the network device. In a case where the second configuration information is used to configure the payload of the second signaling, the payload of the second signaling is determined based on the second configuration information. In a case where the second configuration information is used to configure the maximum value of the payload of the second signaling, at least one of the payload of the second signaling or the maximum value of the payload of the second signaling is determined based on the second configuration information.

The aggregated cell refers to a cell aggregated with the second quantity of physical channels or cells. That is, the aggregated cell is an aggregated cell associated with the second quantity of physical channels or cells.

In some embodiments, at least one of the payload of the second signaling or the maximum value of the payload of the second signaling is determined based on at least one of the following:
- the number of PRBs of the scheduled physical channel corresponding to the second signaling;
- the number of CBGs of the scheduled physical channel corresponding to the second signaling;
- the number of codewords of the scheduled physical channel corresponding to the second signaling;
- precoding information of the scheduled physical channel corresponding to the second signaling;
- the number of PRBs of the scheduled cell corresponding to the second signaling;
- the number of CBGs of the scheduled cell corresponding to the second signaling;
- the number of codewords of the scheduled cell corresponding to the second signaling; or
- precoding information of the scheduled cell corresponding to the second signaling.

The scheduled physical channel corresponding to the second signaling is the physical channel corresponding to the identification information of at least one of the second quantity of physical channels in the second signaling. The scheduled cell corresponding to the second signaling is the cell corresponding to the identification information of at least one of the second quantity of cells in the second signaling.

### IV. Contents related to the physical resource relationship between the first signaling and the second signaling

### 1. A time-domain relationship between the first signaling and the second signaling

In some embodiments, the time-domain resources occupied by the second signaling are not preceding the time-domain resources occupied by the first signaling.

In some embodiments, the time-domain relationship between the first signaling and the second signaling satisfies at least one of:
- a start position of the time-domain resources occupied by the second signaling is aligned with a start position of the time-domain resources occupied by the first signaling;
- an end position of the time-domain resources occupied by the second signaling is aligned with an end position of the time-domain resources occupied by the first signaling;
- the start position of the time-domain resources occupied by the second signaling is aligned with the end position of the time-domain resources occupied by the first signaling;
- the start position of the time-domain resources occupied by the second signaling immediately follows the start position of the time-domain resources occupied by the first signaling;
- the end position of the time-domain resources occupied by the second signaling immediately follows the end position of the time-domain resources occupied by the first signaling; or
- the start position of the time-domain resources occupied by the second signaling immediately follows the end position of the time-domain resources occupied by the first signaling.

In some embodiments, an interval between the time-domain resources occupied by the second signaling and the time-domain resources occupied by the first signaling is less than a first threshold; wherein the first threshold is determined in the communication protocol, configured by the network device, or determined by the terminal device and the network device.

In some embodiments, the time-domain relationship between the first signaling and the second signaling satisfies at least one of:
- an interval between a start time-domain unit of the time-domain resources occupied by the second signaling and a start time-domain unit of the time-domain resources occupied by the first signaling is less than a first threshold;
- an interval between an end time-domain unit of the time-domain resources occupied by the second signaling and an end time-domain unit of the time-domain resources occupied by the first signaling is less than the first threshold; or
- an interval between the start time-domain unit of the time-domain resources occupied by the second signaling and the end time-domain unit of the time-domain resources occupied by the first signaling is less than the first threshold.

In some embodiments, the first threshold is t slots, wherein t is an integer greater than or equal to 0. As illustrated in FIG. 3, the end position of the time-domain resources occupied by the second signaling is aligned with the end position of the time-domain resources occupied by the first signaling, and the interval between the start slot of the time-domain resources occupied by the second signaling and the start slot of the time-domain resources occupied by the first signaling is less than t slots.

In some embodiments, the first threshold is t symbols. As illustrated in FIG. 4, the start position of the time-domain resources occupied by the second signaling is subsequent to the start position of the time-domain resources occupied by the first signaling, and the interval between the start symbol of the time-domain resources occupied by the second signaling and the end symbol of the time-domain resources occupied by the first signaling is less than t symbols.

### 2. Transmission resources for the first signaling and the second signaling

In some embodiments, the first signaling and the second signaling are transmitted based on agreed physical resources. The agreed physical resources are configured by a network device, determined in a communication protocol, or determined by negotiation between the network device and the terminal device.

The physical resources include at least one of a time-domain resource, a frequency-domain resource, a search space corresponding to a control channel, an aggregation level corresponding to the control channel, or a candidate set corresponding to the control channel.

In some embodiments, the physical resources used by the second signaling are partially overlapped with the physical resources used by the first signaling. For example, the first signaling and the second signaling are transmitted in the same cell; or the first signaling and the second signaling are transmitted in the same bandwidth part (BWP); or the first signaling and the second signaling are transmitted in the same slot; or the first signaling and the second signaling are transmitted in the same search space; and so on.

### V. Association between the first signaling and the second signaling

Considering that the first signaling and the second signaling may include one or more types of information, the following describes four types of associations between the first signaling and the second signaling, but not intended to limit the specific association between the first signaling and the second signaling.

**Relationship 1:** The first signaling indicates the first quantity and signaling parameters of the first quantity of second signalings.

For example, in a case where the first quantity is 4, the terminal device may receive the second signaling based on the first quantity indicated by the first signaling. Based on the first quantity, the terminal device may determine that the received second signaling are complete and without loss by determining whether the quantity of received second signaling reaches the first quantity, thereby improving reliability.

In a case where the first signaling indicates the formats of four second signaling, the terminal device may receive them based on the formats indicated by the first signaling, thereby improving reception efficiency, accuracy, and reliability.

Furthermore, in a case where the second signaling is transmitted in a PDCCH, the terminal device may receive the second signaling based on blind detection. In a case where the terminal device determines that the terminal device has received four second signaling, the terminal device may stop the blind detection, thereby saving power consumption.

In a case where the first signaling indicates the formats of four second signaling, the terminal device may perform the blind detection based on the formats indicated by the first signaling, thereby reducing meaningless blind detection, improving blind detection efficiency, and saving power.

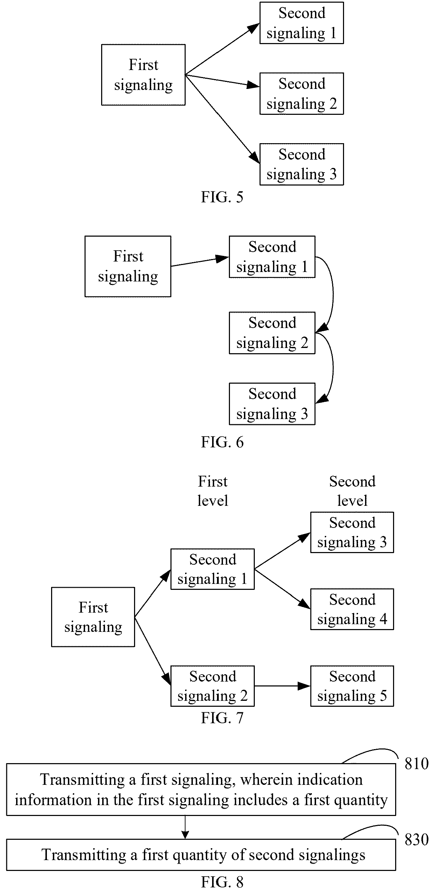

**Relationship 2:** As illustrated in FIG. 5, the first signaling indicates physical resource information of a first quantity of second signalings.

For example, the first quantity is 3, the first signaling uniformly indicates the physical resource information used by a second signaling 1, a second signaling 2, and a second signaling 3, or respectively indicates the physical resource information used by second signaling 1, second signaling 2, and second signaling 3. The terminal device may receive the second signaling 1, the second signaling 2, and the second signaling 3 based on the physical resource information indicated by the first signaling, thereby significantly reducing the number of blind detections and even eliminating the blind detection on the second signaling, thereby saving power. Furthermore, subsequent to receiving the first signaling, the terminal device may independently receive each second signaling. The interpretation or use of each second signaling does not depend on the correct reception of other second signaling, thereby achieving high reliability. However, in this case, the number of bits in the first signaling may be large.

Furthermore, in a case where the first signaling further indicates the first quantity and the format of the first quantity of second signalings, the terminal device may determine whether the received second signaling are complete and without loss by determining whether the number of received second signaling reaches the first quantity. Furthermore, the terminal device may receive the second signaling based on the format indicated by the first signaling, thereby improving reception efficiency, accuracy, and reliability.

**Relationship 3:** The first quantity of second signalings include p (a positive integer) levels of second signalings, with each level including one second signaling.

The first signaling includes at least one of the signaling parameter or the number of the first-level second signaling. The i^{th}-level second signaling includes at least one of the signaling parameter or the number of the (i+1)^{th}-level second signaling, wherein i+1 is a positive integer greater than 1 and less than or equal to p.

Therefore, it can be considered that the first signaling is associated with the first-level second signaling, the first-level second signaling is associated with the first signaling and the second-level second signaling, and the i^{th}-level second signaling is associated with the (i - 1)^{th}-level second signaling (if any) and the (i+1)^{th}-level second signaling.

As illustrated in FIG. 6, the first quantity is 3, p is 3, the first signaling indicates physical resource information of second signaling 1, the second signaling 1 indicates physical resource information of second signaling 2, and the second signaling 2 indicates physical resource information of second signaling 3.

The terminal device receives the second signaling 1 based on the physical resource information indicated by the first signaling, then receives the second signaling 2 based on the physical resource information indicated by the second signaling 1, and finally receives the second signaling 3 based on the physical resource information indicated by the second signaling 2. Therefore, the terminal device does not need to perform the blind detection, which helps to save power.

Furthermore, in addition to physical resource information, if information such as the number and the format are also indicated, the terminal device may also determine whether the received second signaling are complete and without loss, thereby improving reception efficiency, accuracy, and reliability.

That is, a "hierarchical relationship" or "dependency relationship" is present between the first signaling and the first quantity of second signalings under the relationship 2, and the physical resource information of each second signaling is indicated by another second signaling or the first signaling. Because the first information in the first signaling only needs to include the signaling parameters of one second signaling, and the first information in one second signaling only needs to include the signaling parameters of another second signaling, the overhead of both the first signaling and the second signaling can be reduced, thereby saving transmission resources. However, because the plurality of second signaling are associated with each other, the successful reception of the i^{th}-level second signaling may affect the reception of the (i+1)^{th}-level second signaling, thereby potentially reducing scheduling reliability, increasing the transmission failure rate, and lowering system efficiency.

**Relationship 4:** The first quantity of second signalings include k (a positive integer) levels of second signalings, wherein the number of each level of second signaling is at least one.

The first signaling includes at least one of the signaling parameters or the number of at least one first-level second signaling. One i^{th}-level second signaling includes at least one of the signaling parameter or the number of at least one (i+1)^{th}-level second signaling, wherein i+1 is a positive integer greater than 1 and less than or equal to k.

Therefore, it can be considered that the first signaling is associated with at least one first-level second signaling, one first-level second signaling is associated with the first signaling and at least one second-level second signaling, and one i^{th}-level second signaling is associated with one (i - 1)^{th}-level second signaling (if any) and at least one (i+1)^{th}-level second signaling.

As illustrated in FIG. 7, the first quantity is 5 and k is 2. The first signaling indicates physical resource information of two first-level second signaling (a second signaling 1 and a second signaling 2), the second signaling 1 indicates physical resource information of two second-level second signalings (a second signaling 3 and a second signaling 4), and the second signaling 2 indicates physical resource information of one second-level second signaling (a second signaling 5).

The terminal device receives the second signaling 1 and the second signaling 2 based on the physical resource information indicated by the first signaling, then receives the second signaling 3 and the second signaling 4 based on the physical resource information indicated by the second signaling 1, and receives the second signaling 5 based on the physical resource information indicated by the second signaling 2. Therefore, the terminal device does not need to perform the blind detection, which helps to save power.

Furthermore, in addition to physical resource information, in a case where information such as the number and the format are also indicated, the terminal device may also determine whether the received second signaling are complete and without loss, thereby improving reception efficiency, accuracy, and reliability.

Because the first information in the first signaling only needs to include some of the signaling parameters of the second signaling, the first information in one second signaling only needs to include the signaling parameters of at least one other second signaling, the overheads of both the first signaling and the second signaling are reduced, thereby saving transmission resources.

Furthermore, although a "hierarchical relationship" or "dependence relationship" is present between the first signaling and the first quantity of second signalings in the relationship 3, not all second signaling are associated with each other. Failure of reception of some second signaling will not affect the reception of all other second signaling. Compared to the relationship 2, the relationship 3 offers higher reliability, reduces the transmission failure rate, and ensures system efficiency.

It should be understood that the above four associations may be used respectively or in combination. For example, the relationship 1 and the relationship 2 may be used in combination, the relationship 1 and the relationship 3 may be used in combination, the relationship 1 and the relationship 4 may be used in combination, the relationship 2 and the relationship 3 may be used in combination, the relationship 2 and the relationship 4 may be used in combination, and so on.

It should be understood that the above five aspects may be used respectively or in combination, and thus the methods according to the embodiments of the present disclosure are made highly robust and flexible. For example, the first quantity in process 210 adopts the design described in "I. Contents related to the first quantity," and the first signaling in process 210 adopts the design described in "II. Contents related to the first signaling," making the method according to the embodiments of the present disclosure highly reliable and the first signaling transmitted between the network device and the terminal device highly flexible. For another example, the second signaling in process 230 adopts the design described in "III. Contents related to the second signaling," making the first signaling transmitted between the network device and the terminal device highly flexible and efficient. For example, the first signaling in process 210 and the second signaling in process 230 utilize the design described in "IV. Physical resource relationship Between the first signaling and the second signaling" and "V. Association between the first signaling and the second signaling," providing high flexibility in the transmission of the first signaling and the second signaling. The embodiments of the present disclosure may be freely combined with the above five aspects to meet the transmission and scheduling requirements of various communication scenarios. The beneficial effects of each design when used alone are also effective when used in combination. All combinations are not listed herein.

FIG. 8 is a flowchart of a scheduling method according to some embodiments of the present disclosure. The method is illustrated using the network device 110 illustrated in FIG. 1 as an example. The method includes at least some of the following processes.

**In process 810,** the network device transmits a first signaling, wherein indication information in the first signaling includes a first quantity.

The network device transmits the first signaling to the terminal device. The first signaling is transmitted via unicast, multicast, or broadcast.

In some embodiments, the first quantity corresponds to a count of second signalings that the network device expects the terminal device to receive; or the first quantity corresponds to a count of second signalings that the network device instructs the terminal device to receive; or the first quantity corresponds to a count of second signalings that the terminal device needs to receive; or the first quantity corresponds to a count of second signalings transmitted by the network device to the terminal device; or the first quantity corresponds to a count of second signalings associated with the first signaling.

The second signaling associated with the first signaling may be understood as second signaling used in conjunction with the first signaling; or as second signaling used together with the first signaling to schedule a second quantity of physical channels or cells.

The physical channel includes at least one of a PDSCH, a PUSCH, a PUCCH, a PSSCH, a PSCCH, or the like.

In some embodiments, the first quantity is explicitly indicated by the first signaling, or the first quantity is implicitly indicated by the first signaling.

In some embodiments, the specific method of implicit indication can be determined in the communication protocol, configured by the network device, or determined by negotiation between the network device and the terminal device.

In some embodiments, the first signaling may be referred to as a basic signaling, a main signaling, a first-level signaling, a level-0 signaling, or the like.

**In process 830,** the network device transmits a first quantity of second signalings.

The network device transmits the second signaling to the terminal device. The second signaling is transmitted via unicast, multicast, or broadcast.

In some embodiments, the second signaling may be referred to as an extended signaling, a slave signaling, a secondary signaling, an i^{th}-level signaling, or the like.

In some embodiments, each of the first signaling and the second signaling may be understood as a control signaling, a scheduling signaling, or an authorization signaling. In some embodiments, in an uplink or downlink transmission scenario, at least one of the first signaling or the second signaling is the DCI; and in a sidelink transmission scenario, at least one of the first signaling or the second signaling is the SCI.

The first signaling and the second signaling are used to schedule the second quantity of physical channels or cells, wherein the second quantity is a positive integer. That is, the number of scheduled physical channels or scheduled cells is the second quantity.

The first signaling and the second signaling are used to schedule the second quantity of physical channels or cells, wherein the second quantity is a positive integer.

In some embodiments, the network device transmits the first signaling and the second signaling.

In some embodiments, the network device transmits the first signaling first and then transmits the second signaling.

In some embodiments, the information indicated by the first signaling is partially overlapped with the information indicated by the second signaling; or the information indicated by the first signaling is different from the information indicated by the second signaling.

In some embodiments, the format of the first signaling is different form the format of the second signaling, that is, the information fields in the first signaling are different from the information fields in the second signaling.

In some embodiments, scheduling information for one of the second quantity of physical channels is carried by one first signaling, or by one second signaling, or by one first signaling and one second signaling, or by a plurality of second signalings, or by one first signaling and a plurality of second signalings.

In some embodiments, scheduling information for one of the second quantity of cells is carried by one first signaling, or by one second signaling, or by one first signaling and one second signaling, or by a plurality of second signalings, or by one first signaling and a plurality of second signalings.

In some embodiments, the network device may further configure first configuration information for the terminal device. The first configuration information includes at least one of the maximum number of codewords, the number of CBGs, the transmission direction, the time-domain resources, or the maximum number of HARQ processes. For details, reference may be made to the above description and will not be elaborated herein any further.

In some embodiments, the network device may further configure second configuration information for the terminal device. The second configuration information is used to configure at least one of the payload of the second signaling or the maximum payload size of the second signaling.

In summary, the methods according to the embodiments of the present disclosure support a network device scheduling the second quantity of physical channels or cells over the first signaling and the second signaling. The total number of bits in the first signaling and the second signaling may exceed the coding capacity of a single signaling in the related arts, thereby enabling simultaneous scheduling of more physical channels or cells and improving scheduling efficiency. Furthermore, because the first quantity has been indicated by the first signaling, upon receiving the second signaling, the terminal device may not only determine whether the received second signaling has reached the first quantity, thereby improving reliability; but also stop the blind detection upon receiving the first quantity of second signalings, thereby avoiding power consumption waste caused by meaningless blind detection. Furthermore, during scheduling of the second quantity of physical channels or cells using the first signaling and the second signaling, in the case where the first signaling and the second signaling include common information corresponding to the scheduled physical channels or scheduled cells, the greater the value of the second quantity, the higher the usage efficiency of the transmission resources corresponding to the first signaling and the second signaling.

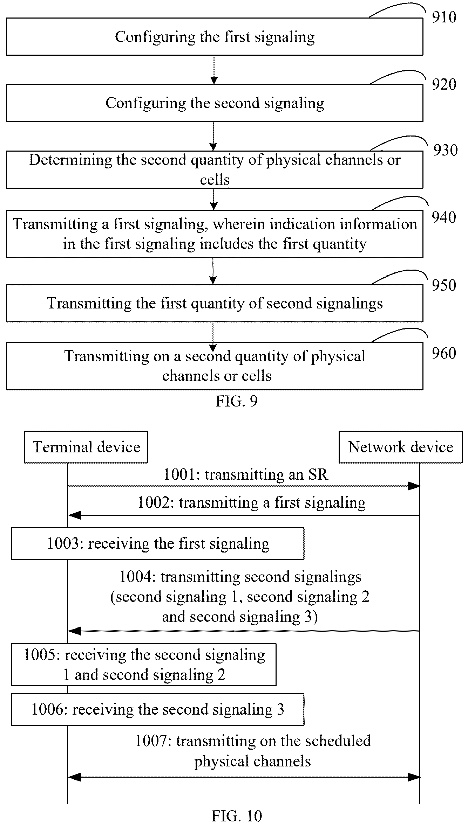

FIG. 9 is a schematic flowchart of the scheduling method according to some embodiments of the present disclosure. The method is illustrated using the network device 110 illustrated in FIG. 1 as an example. The method includes at least some of the following processes.

**In process 910,** the network device configures the first signaling.

In some embodiments, the network device configures at least one of the number of bits or the maximum number of bits in the first signaling.

In some embodiments, the network device configures information in the first signaling, such as at least one of the first information, the second information, or the third information.

In some embodiments, the network device configures the first signaling to include or exclude the third information based on at least one of an actual scheduling situation, the scheduling capability of the network device itself, the capability of the terminal device, the cell aggregation level, the number of aggregated cells, the transmission resources, the value of the first quantity, the value of the second quantity, or a QCI, thereby improving scheduling reliability and system efficiency.

In some embodiments, the network device flexibly configures the first quantity or the maximum value of the first quantity based on at least one of an actual scheduling situation, the scheduling capability of the network device itself, the capability of the terminal device, the cell aggregation level, the number of aggregated cells, the transmission resources, the value of the first quantity, the value of the second quantity, or a QCI, thereby improving scheduling efficiency and system transmission efficiency.

In some embodiments, the network device configures at least one of the format, transmission mode, or physical resource information of the first signaling.

The relevant contents involved in process 910 can be found in the preceding contents and are not elaborated herein any further.

**In process 920,** the network device configures the second signaling.

In some embodiments, the network device configures at least one of the number of bits or the maximum value of the bit number of the second signaling.

In some embodiments, the network device configures information in the second signaling, such as at least one of the identification information, the first information, or the second information.

In some embodiments, the network device configures the hierarchical relationship or depending relationship of the second signaling. For example, the configuration includes determining whether one second signaling carries signaling parameters of other second signaling, that is, whether the second signaling has a hierarchical or depending relationship. Another example is configuring the maximum number of signaling parameters of other second signaling one second signaling can include, that is, the maximum number of other second signaling one second signaling can be associated with. That is, the network device configures the association between the first signaling and the second signaling, as well as the associations between a plurality of second signalings.

In some embodiments, the network device configures at least one of the payload of the second signaling or the maximum payload of the second signaling.

In some embodiments, the network device configures at least one of the format, transmission mode, or physical resource information of the second signaling.

In some embodiments, the network device configures the physical resource relationship between the first signaling and the second signaling.

In some embodiments, the network device configures complete scheduling information required for the second quantity of physical channels or cells carried in the first signaling and the second signaling.

The relevant contents involved in process 920 can be found in the preceding contents and are not elaborated herein any further.

**In process 930,** the network device determines the second quantity of physical channels or cells.

In some embodiments, the network device determines the second quantity of physical channels or cells based on its own transmission requirements and/or a scheduling request (SR) from the terminal device. That is, the network device determines which physical channels or cells need to be scheduled and the number of physical channels or cells that need to be scheduled.

The "need to be scheduled" can be understood as "desired to be scheduled" or "requested to be scheduled."

In some embodiments, the network device configures the maximum value of the second quantity, or the network device and the terminal device negotiate to determine the maximum value of the second quantity.

The relevant contents involved in process 930 can be found in the preceding contents and are not elaborated herein any further.

**In process 940,** the network device transmits a first signaling, wherein indication information in the first signaling includes the first quantity.

The network device transmits the first signaling to the terminal device. The first signaling is transmitted via unicast, multicast, or broadcast.

In some embodiments, the network device explicitly indicates the first quantity over the first signaling, or implicitly indicates the first quantity over the first signaling. The first quantity is an integer greater than or equal to 0.

In some embodiments, the specific method of implicit indication can be determined in the communication protocol, configured by the network device, or determined by negotiation between the network device and the terminal device.

The relevant contents involved in process 940 may be found in the preceding contents and are not elaborated herein any further.

**In process 950,** the network device transmits the first quantity of second signalings.

The network device transmits the second signaling to the terminal device. The second signaling is transmitted via unicast, multicast, or broadcast.

The first signaling and the second signaling are used to schedule a second quantity of physical channels or cells, wherein the second quantity is a positive integer.

In some embodiments, the network device transmits the first signaling and the second signaling simultaneously; alternatively, the network device transmits the first signaling first and then transmits the second signaling.

In some embodiments, the information indicated by the first signaling is partially overlapped with the information indicated by the second signaling; or the information indicated by the first signaling is different from the information indicated by the second signaling.

In some embodiments, the format of the first signaling is different from the format of the second signaling, that is, the information fields in the first signaling are different from the information fields in the second signaling.

In some embodiments, the scheduling information for one of the second quantity of physical channels is carried by one first signaling, or by one second signaling, or by one first signaling and one second signaling, or by a plurality of second signalings, or by one first signaling and a plurality of second signalings.

In some embodiments, the scheduling information for one of the second quantity of cells is carried by one first signaling, or by one second signaling, or by one first signaling and one second signaling, or by a plurality of second signalings, or by one first signaling and a plurality of second signalings.

The relevant contents involved in process 950 may be found in the preceding contents and are not elaborated herein any further.

**In process 960,** the network device transmits on a second quantity of physical channels or cells.

In some embodiments, the network device transmits at least one of data, system messages, control information, reference signals, or the like, to the terminal device on the second quantity of physical channels or cells.

In some embodiments, the network device receives at least one of data, control information, reference signals, or the like from the terminal device on the second quantity of physical channels or cells.

It should be understood that in the embodiments of the present disclosure, processes 910, 920, 930, and 960 are optional processes. The above processes can be freely combined or separated. For example, processes 910 and 920 may be implemented as one process, that is, processes 910 and 920 may be combined into one process; the processes 910, 920, and 960 may be implemented as one process; and processes 940 and 950 may be implemented as one process. The execution sequence of the various processes may be changed based on actual situations. For example, process 920 may be performed prior to process 910; process 960 may be performed prior to process 940; and process 960 may be performed prior to process 910 and/or process 920. The above processes may be used respectively or in combination. For example, process 910 may be implemented as a configuration method alone; process 920 may be implemented as a configuration method alone; processes 910 and 920 may be combined to form a configuration method; process 960 may be implemented as a transmission method alone; and processes 960, 910, and 920 may be combined to form a transmission method.

In summary, the methods according to the embodiments of the present disclosure supports the network device in flexibly designing or configuring the first signaling and the second signaling, thereby enabling high flexibility in scheduling the second quantity of physical channels or cells. Furthermore, because the scheduling of the physical channels or cells is achieved jointly by the first signaling and the second signaling, the total number of bits in the first signaling and the second signaling may exceed the coding capacity of a single signaling in the related arts, thereby enabling simultaneous scheduling of more physical channels or cells and improving scheduling efficiency. In addition, because the first quantity has been indicated by the first signaling, upon receiving the second signaling, the terminal device may not only determine whether the received second signaling reaches the first quantity, thereby improving reliability; but also stop the blind detection upon receiving the first quantity of second signalings, thereby avoiding wasted power consumption caused by meaningless blind detection. Furthermore, during scheduling of the second quantity of physical channels or cells using the first signaling and the second signaling, in a case that the first signaling and the second signaling include common information corresponding to the scheduled physical channels or scheduled cells, then the greater the value of the second quantity, the higher the usage efficiency of the transmission resource corresponding to the first signaling and the second signaling.

FIG. 10 is a flowchart of a scheduling method according to some embodiments of the present disclosure. The method is illustrated by the example of the network device 110 and the terminal device 120 illustrated in FIG. 1. The method includes at least some of the following processes.

**In process 1001,** the terminal device transmits an SR to the network device.

The terminal device requests uplink transmission resources from the network device, including PUCCH resources and/or PUSCH resources.

**In process 1002,** the network device transmits a first signaling to the terminal device.

The indication information in the first signaling includes the first quantity. In some embodiments, the first quantity is 3.

In some embodiments, the first signaling includes at least one of first information, second information, or third information. For example, the first signaling includes the first information and the second information, or the first signaling includes the first information, the second information, and the third information. The embodiment is described using the example of the first signaling including the first information and the second information.

The first information includes signaling parameters for two second signaling. For details about the signaling parameters, reference may be made to the preceding content. In some embodiments, the two second signaling are DCI 1 and DCI 2. The first information indicates the formats of DCI 1 and DCI 2, respectively, and collectively indicates the time-frequency resources and transmission parameters of the DCI 1 and the DCI 2.

In some embodiments, the first signaling and the second signaling are used to schedule five physical channels, including four downlink physical channels and one uplink physical channel. The eight physical channels are CH1, CH2, CH3, CH4, and CH5.

In some embodiments, the first signaling is DCI 0.

**In process 1003,** the terminal device receives the first signaling.

Subsequent to receiving the first signaling, the terminal device decodes the received first signaling and acquires the information in the first signaling.

**In process 1004,** the network device transmits second signaling to the terminal device.

The network device transmits the first quantity of second signalings.

In some embodiments, the time-domain resources occupied by the first quantity of second signalings may be the same or different. The interval between the time-domain resources occupied by the first quantity of second signalings and the time-domain resources occupied by the first signaling is less than the first threshold.

In some embodiments, the second signaling includes at least one of identification information, the first information, or the third information.

Illustratively, the first quantity of second signalings transmitted by the network device includes a second signaling 1, a second signaling 2, and a second signaling 3. The following uses the example where the second signaling 1 is DCI 1, the second signaling 2 is DCI 2, and the second signaling 3 is DCI 3 for illustrative purposes, but not intended to limit the second signaling.

**In process 1005,** the terminal device receives the second signaling 1 and the second signaling 2.

Subsequent to receiving the second signaling 1 and the second signaling 2, the terminal device decodes each and acquires the information in each of the second signaling 1 and the second signaling 2.

In some embodiments, the DCI 1 includes: an identifier of DCI 1, an identifier of the first signaling, an identifier of CH1, an identifier of CH2, scheduling information for CH1, scheduling information for CH2, and signaling parameters of DCI 3, wherein DCI 3 is the second signaling.

In some embodiments, DCI 2 includes: an identifier of DCI 2, an identifier of the first signaling, an identifier of CH3, an identifier of CH4, scheduling information for CH3, and a first part of scheduling information for CH4.

Based on the identifier of DCI 1 and the identifier of DCI 2, the terminal device compares the first quantity (3) indicated by the first signaling to determine that there is still a second signaling that has not been received, that is, the complete scheduling information has not been obtained yet.

**In process 1006,** the terminal device receives the second signaling 3.

In some embodiments, the terminal device receives DCI 3 based on the signaling parameters of the DCI 3 in DCI 1. In some embodiments, the terminal device receives DCI 3 on the physical resources of DCI 3 indicated by DCI 1, so there is no need to perform blind detection on DCI 3, thereby saving power consumption.

In some embodiments, DCI 3 includes: an identifier of DCI 3, an identifier of the first signaling, an identifier of CH4, an identifier of CH5, scheduling information for a second part of CH4, and scheduling information for CH5.

For example, the terminal device compares the identifiers of DCI 1, DCI 2, and DCI 3 with the first quantity (3) indicated by the first signaling, and determines that the terminal device has received all the second signaling corresponding to the current scheduling, that is, the terminal device has acquired the complete scheduling information required for the current scheduling, such that both scheduling efficiency and scheduling reliability are ensured in the methods according to the embodiments of the present disclosure.

**In process 1007,** the terminal device and the network device transmit on the scheduled physical channels.

In some embodiments, the terminal device transmits uplink data or uplink control information (UCI) to the network device on the uplink physical channel in the five physical channels scheduled by the first signaling and the second signaling. In some embodiments, the terminal device transmits an HARQ-ACK codebook or channel state information (CSI) on the PUCCH scheduled by the first signaling and the second signaling. Correspondingly, the network device receives the HARQ-ACK codebook, CSI, or uplink data, or the like, transmitted by the terminal device on the uplink physical channel.

In some embodiments, the network device transmits downlink data, DCI, reference signals, or the like, to the terminal device on a downlink physical channel in the five physical channels scheduled by the first signaling and the second signaling. Correspondingly, the terminal device receives the downlink data, DCI, reference signals, or the like, transmitted by the network device on the downlink physical channel.

In summary, the methods according to the embodiments of the present disclosure support flexible scheduling of more physical channels or cells over the first signaling and the second signaling. While significantly improving scheduling efficiency, high reliability and flexibility are achieved, and power consumption and transmission resources are saved. In this way, the methods ensure higher transmission efficiency, better stability, greater flexibility, and less resource waste between the network device and the terminal device.

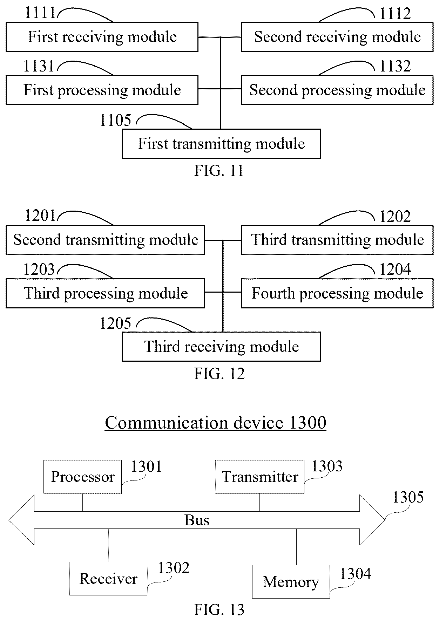

FIG. 11 is a schematic structural diagram of a scheduling apparatus according to some embodiments of the present disclosure. The apparatus includes at least part of a first receiving module 1111, a second receiving module 1112, a first processing module 1131, a second processing module 1132, or a first transmitting module 1105.

The first receiving module 1111 is configured to receive first signaling, wherein information indicated by the first signaling includes a first quantity.

The second receiving module 1112 is configured to receive a first quantity of second signalings.

The first signaling and the second signaling are configured to schedule a second quantity of physical channels or cells, the first quantity is an integer greater than or equal to 0, and the second quantity is a positive integer.

In some embodiments, the first quantity satisfies at least one of the following conditions: a value of the first quantity is correlated to a value of the second quantity; a maximum value of the first quantity is determined based on first configuration information; or a maximum value of the first quantity is determined by a communication protocol.

In some embodiments, the apparatus further includes a first processing module 1131. The first processing module 1131 is configured to determine the maximum value of the first quantity based on the first configuration information.

In some embodiments, a number of bits in the first signaling satisfies at least one of the following conditions: the number of bits in the first signaling is determined based on a maximum value of the first quantity; the number of bits in the first signaling is correlated to a value of the second quantity; or the maximum number of bits in the first signaling is determined by a communication protocol.

In some embodiments, the apparatus further includes a second processing module 1132. The second processing module 1132 is configured to determine the number of bits in the first signaling based on the maximum value of the first quantity.

In some embodiments, the value of the first quantity is positively correlated to the value of the second quantity.

In some embodiments, the value of the first quantity is correlated to a numerical range to which the second quantity belongs.

In some embodiments, the value of the first quantity is a first value in a case where the second quantity belongs to a first numerical range; the value of the first quantity is a second value in a case where the second quantity belongs to a second numerical range; and the value of the first quantity is a third value in a case where the second quantity belongs to a third numerical range; wherein the maximum value of the first numerical range is less than the minimum value of the second numerical range, the maximum value of the second numerical range is less than the minimum value of the third numerical range, the first value is less than the second value, the second value is less than the third value, the first value is an integer greater than or equal to 0, the second value is an integer greater than 0, and the third value is an integer greater than 0.

In some embodiments, the first configuration information includes at least one of: a maximum number of codewords corresponding to one of the second quantity of physical channels; a number of CBGs corresponding to one of the second quantity of physical channels; a transmission direction corresponding to one of the second quantity of physical channels; a maximum number of codewords corresponding to one of the second quantity of cells; a number of CBGs corresponding to one of the second quantity of cells; a transmission direction corresponding to one of the second quantity of cells; time-domain resources occupied by at least one physical channel in one of the second quantity of cells; or a maximum number of HARQ processes.

In some embodiments, the first signaling includes at least one of: first information, wherein the first information includes signaling parameters of at least one second signaling, the at least one second signaling being at least one of the first quantity of second signalings; second information, wherein the second information includes common information corresponding to the second quantity of physical channels or cells; or third information, wherein the third information includes scheduling information for at least one of the second quantity of physical channels, or scheduling information for at least one of the second quantity of cells.

In some embodiments, the signaling parameters of the at least one second signaling include at least one of: a format of the at least one second signaling; a payload of the at least one second signaling; physical resource information of the at least one second signaling, wherein the physical resource information includes at least one of time-domain resource information, frequency-domain resource information, or control channel information; or transmission parameters of the at least one second signaling, wherein the transmission parameters include at least one of a coding method, a modulation method, a coding rate, a reference signal, or a resource mapping method.

In some embodiments, the time-domain resource information includes at least one of: a time-domain unit in which the at least one second signaling is located, a start symbol occupied by the at least one second signaling, an end symbol occupied by the at least one second signaling, or a number of symbols occupied by the at least one second signaling; and/or the frequency-domain resource information includes at least one of: a start RB occupied by the at least one second signaling, a start subcarrier occupied by the at least one second signaling, an end RB occupied by the at least one second signaling, an end subcarrier occupied by the at least one second signaling, a number of RBs occupied by the at least one second signaling, or a number of subcarriers occupied by the at least one second signaling; and/or the control channel information includes at least one of a search space identifier, a search space number, an aggregation level, a candidate set identifier, or a candidate set number.

In some embodiments, part or all of the signaling parameters of different instances of the at least one second signaling are uniformly indicated by the first information.

In some embodiments, part or all of the signaling parameters of different instances of the at least one second signaling are respectively indicated by the first information.

In some embodiments, the second information includes at least one of: an identifier of the first signaling; an identifier of a format of the first signaling; a downlink allocation index; scheduled PUCCH TPC; a PUCCH resource indicator; a PDSCH to HARQ timing indicator; a one-short HARQ-ACK request; time-domain resource allocation information; a priority indicator; an indicator of the second quantity of cells; or an open-loop power control parameter indication.

In some embodiments, the second signaling includes at least one of: identification information of the second signaling; identification information of the first signaling; identification information of at least one of the second quantity of physical channels; identification information of at least one of the second quantity of cells; first information, wherein the first information includes signaling parameters of at least one second signaling, the at least one second signaling being at least one of the first quantity of second signalings; or third information, wherein the third information includes scheduling information for at least one of the second quantity of physical channels, or scheduling information for at least one of the second quantity of cells.

In some embodiments, the third information includes at least one of: a frequency-domain resource allocation for a first physical channel; an HARQ process number carried by a first physical channel; an MCS for a first physical channel; a new data indicator for each TB; a redundancy version for each TB; or a time-domain resource allocation for a first physical channel; wherein the first physical channel is at least one of the second quantity of physical channels, or at least one physical channel transmitted within the second quantity of cells.

In some embodiments, whether the first signaling includes the third information is configured by a network device.

In some embodiments, at least one of the first signaling or the second signaling is DCI.

In some embodiments, a format of the first signaling includes one of DCI format 0-0, DCI format 0-1, DCI format 0-2, DCI format 0-3, DCI format 1-0, DCI format 1-1, DCI format 1-2, or DCI format 1-3.

In some embodiments, the first receiving module 1111 is further configured to receive the first signaling based on at least one of a coding scheme for a PDCCH, a modulation scheme for the PDCCH, a resource mapping scheme for the PDCCH, or a physical channel structure of the PDCCH.

In some embodiments, the second receiving module 1112 is further configured to receive the second signaling based on at least one of a coding scheme for a PDCCH, a modulation scheme for the PDCCH, a resource mapping scheme for the PDCCH, or a physical channel structure of the PDCCH.

In some embodiments, the second receiving module 1112 is further configured to receive the second signaling based on at least one of a PDSCH or a reference signal structure of the PDSCH.

In some embodiments, the second receiving module 1112 is further configured to receive the second signaling based on polar decoding, LDPC decoding, or RM decoding.

In some embodiments, payloads of different second signaling are the same or different.

In some embodiments, the first processing module 1131 is further configured to determine at least one of the payload of the second signaling or a maximum payload size of the second signaling based on at least one of: second configuration information, wherein the second configuration information is used to configure at least one of the payload of the second signaling or the maximum payload size of the second signaling; a number of PRBs of at least one of aggregated cells corresponding to the second quantity of physical channels or cells; a number of CBGs of at least one of the aggregated cells; a number of codewords of at least one of the aggregated cells; or precoding information of at least one of the aggregated cells.

In some embodiments, the first processing module 1132 is further configured to determine at least one of the payload of the second signaling or a maximum payload size of the second signaling based on at least one of: a number of PRBs of a scheduled physical channel corresponding to the second signaling; a number of CBGs of the scheduled physical channel corresponding to the second signaling; a number of codewords of the scheduled physical channel corresponding to the second signaling; precoding information of the scheduled physical channel corresponding to the second signaling; a number of PRBs of a scheduled cell corresponding to the second signaling; a number of CBGs of the scheduled cell corresponding to the second signaling; a number of codewords of the scheduled cell corresponding to the second signaling; or precoding information of the scheduled cell corresponding to the second signaling.

In some embodiments, an interval between the time-domain resources occupied by the second signaling and the time-domain resources occupied by the first signaling is less than a first threshold; wherein the first threshold is determined in a communication protocol, or configured by a network device, or determined by the terminal device and the network device.

In some embodiments, the apparatus further includes a first transmitting module 1105. The first transmitting module 1105 is configured to transmit at least one of UCI or uplink data to the network device.

In some embodiments, at least one of the first receiving module 1111 or the second receiving module 1112 is further configured to receive other information, signalings, messages or data except the first signaling and the second signaling.

In some embodiments, the first receiving module 1111 and the second receiving module 1112 may be implemented as one receiving module.

In some embodiments, the first processing module 1131 and the second processing module 1132 may be implemented as one processing module.

In summary, in the apparatus according to the embodiments of the present disclosure, because scheduling of physical channels or cells is achieved based on both the first signaling and the second signaling, the total number of bits of the first signaling and the second signaling may exceed the coding capacity of a single signaling in the related arts, thereby enabling simultaneous scheduling of more physical channels or cells and improving scheduling efficiency. Furthermore, because the first quantity has been indicated by the first signaling, upon receiving the second signaling, the terminal device may not only determine whether the received second signaling reaches the first quantity, thereby improving reliability; but also stop the blind detection upon receiving the first quantity of second signalings, thereby avoiding power consumption waste caused by meaningless blind detection. In addition, during scheduling of the second quantity of physical channels or cells using the first signaling and the second signaling, in the case where the first signaling and the second signaling include common information corresponding to the scheduled physical channels or cells, then the greater the value of the second quantity, the higher the usage efficiency of the transmission resources corresponding to the first signaling and the second signaling.

FIG. 12 is a schematic structural diagram of a scheduling apparatus according to some embodiments of the present disclosure. The apparatus includes at least part of a second transmitting module 1201, a third transmitting module 1202, a third processing module 1203, a fourth processing module 1204, or a third receiving module 1205.

The second transmitting module 1201 is configured to transmit a first signaling, wherein information indicated by the first signaling includes a first quantity.

The third transmitting module 1201 is configured to transmit a first quantity of second signalings.

The first signaling and the second signaling are configured to schedule a second quantity of physical channels or cells, the first quantity is an integer greater than or equal to 0, and the second quantity is a positive integer.

In some embodiments, the first quantity satisfies at least one of the following conditions: a value of the first quantity is correlated to a value of the second quantity; a maximum value of the first quantity is configured by a network device; or a maximum value of the first quantity is determined by a communication protocol.

In some embodiments, the apparatus further includes a third processing module 1203. The third process module 1203 is used to configure the maximum value of the first quantity.

In some embodiments, the number of bits in the first signaling satisfies at least one of the following conditions: the number of bits in the first signaling is determined based on a maximum value of the first quantity; the number of bits in the first signaling is correlated to a value of the second quantity; a maximum number of bits in the first signaling is determined by a communication protocol.

In some embodiments, the apparatus further includes a fourth processing module 1204. The fourth process module 1204 is configured to determine the number of bits in the first signaling based on the maximum value of the first quantity.

In some embodiments, the value of the first quantity is positively correlated to the value of the second quantity.

In some embodiments, the value of the first quantity is correlated to a numerical range to which the second quantity belongs.

In some embodiments, the value of the first quantity is a first value in a case where the second quantity belongs to a first numerical range; the value of the first quantity is a second value in a case where the second quantity belongs to a second numerical range; and the value of the first quantity is a third value in a case where the second quantity belongs to a third numerical range; wherein the maximum value of the first numerical range is less than the minimum value of the second numerical range, the maximum value of the second numerical range is less than the minimum value of the third numerical range, the first value is less than the second value, the second value is less than the third value, the first value is an integer greater than or equal to 0, the second value is an integer greater than 0, and the third value is an integer greater than 0.

In some embodiments, the first configuration information includes at least one of: a maximum number of codewords corresponding to one of the second quantity of physical channels; a number of CBGs corresponding to one of the second quantity of physical channels; a transmission direction corresponding to one of the second quantity of physical channels; a maximum number of codewords corresponding to one of the second quantity of cells; a number of CBGs corresponding to one of the second quantity of cells; a transmission direction corresponding to one of the second quantity of cells; time-domain resources occupied by at least one physical channel in one of the second quantity of cells; or a maximum number of HARQ processes.

In some embodiments, the first signaling includes at least one of: first information, wherein the first information includes signaling parameters of at least one second signaling, the at least one second signaling being at least one of the first quantity of second signalings; second information, wherein the second information includes common information corresponding to the second quantity of physical channels or cells; or third information, wherein the third information includes scheduling information for at least one of the second quantity of physical channels, or scheduling information for at least one of the second quantity of cells.

In some embodiments, the signaling parameters of the at least one second signaling include at least one of: a format of the at least one second signaling; a payload of the at least one second signaling; physical resource information of the at least one second signaling, wherein the physical resource information includes at least one of time-domain resource information, frequency-domain resource information, or control channel information; or transmission parameters of the at least one second signaling, wherein the transmission parameters include at least one of a coding method, a modulation method, a coding rate, a reference signal, or a resource mapping method.

In some embodiments, the time-domain resource information includes at least one of: a time-domain unit in which the at least one second signaling is located, a start symbol occupied by the at least one second signaling, an end symbol occupied by the at least one second signaling, or a number of symbols occupied by the at least one second signaling; and/or the frequency-domain resource information includes at least one of: a start RB occupied by the at least one second signaling, a start subcarrier occupied by the at least one second signaling, an end RB occupied by the at least one second signaling, an end subcarrier occupied by the at least one second signaling, a number of RBs occupied by the at least one second signaling, or a number of subcarriers occupied by the at least one second signaling; and/or the control channel information includes at least one of a search space identifier, a search space number, an aggregation level, a candidate set identifier, or a candidate set number.

In some embodiments, part or all of the signaling parameters of different instances of the at least one second signaling are uniformly indicated by the first information.

In some embodiments, part or all of the signaling parameters of different instances of the at least one second signaling are respectively indicated by the first information.

In some embodiments, the second information includes at least one of: an identifier of the first signaling; an identifier of a format of the first signaling; a downlink allocation index; scheduled PUCCH TPC; a PUCCH resource indicator; a PDSCH to HARQ timing indicator; a one-short HARQ-ACK request; time-domain resource allocation information; a priority indicator; an indicator of the second quantity of cells; or an open-loop power control parameter indication.

In some embodiments, the second signaling includes at least one of: identification information of the second signaling; identification information of the first signaling; identification information of at least one of the second quantity of physical channels; identification information of at least one of the second quantity of cells; first information, wherein the first information includes signaling parameters of at least one second signaling, the at least one second signaling being at least one of the first quantity of second signalings; or third information, wherein the third information includes scheduling information for at least one of the second quantity of physical channels, or scheduling information for at least one of the second quantity of cells.

In some embodiments, the third information includes at least one of: a frequency-domain resource allocation for a first physical channel; an HARQ process number carried by a first physical channel; an MCS for a first physical channel; a new data indicator for each TB; a redundancy version for each TB; or a time-domain resource allocation for a first physical channel; wherein the first physical channel is at least one of the second quantity of physical channels, or at least one physical channel transmitted within the second quantity of cells.

In some embodiments, whether the first signaling includes the third information is configured by a network device.

In some embodiments, at least one of the first signaling or the second signaling is DCI.

In some embodiments, a format of the first signaling includes one of DCI format 0-0, DCI format 0-1, DCI format 0-2, DCI format 0-3, DCI format 1-0, DCI format 1-1, DCI format 1-2, or DCI format 1-3.

In some embodiments, the second transmitting module 1201 is further configured to transmit the first signaling based on at least one of a coding scheme for a PDCCH, a modulation scheme for the PDCCH, a resource mapping scheme for the PDCCH, or a physical channel structure of the PDCCH.

In some embodiments, the third transmitting module 1202 is further configured to transmit the second signaling based on at least one of a coding scheme for a PDCCH, a modulation scheme for the PDCCH, a resource mapping scheme for the PDCCH, or a physical channel structure of the PDCCH.

In some embodiments, the third transmitting module 1202 is further configured to transmit the second signaling based on at least one of a PDSCH or a reference signal structure of the PDSCH.

In some embodiments, the third transmitting module 1202 is further configured to transmit the second signaling based on polar coding, LDPC coding, or RM coding.

In some embodiments, payloads of different second signaling are the same or different.

In some embodiments, the third processing module 1203 is further configured to determine at least one of the payload of the second signaling or a maximum payload size of the second signaling based on at least one of: second configuration information, wherein the second configuration information is used to configure at least one of the payload of the second signaling or the maximum payload size of the second signaling; a number of PRBs of at least one of aggregated cells corresponding to the second quantity of physical channels or cells; a number of CBGs of at least one of the aggregated cells; a number of codewords of at least one of the aggregated cells; or precoding information of at least one of the aggregated cells.

In some embodiments, the third processing module 1203 is further configured to determine at least one of the payload of the second signaling or a maximum payload size of the second signaling based on at least one of: a number of PRBs of a scheduled physical channel corresponding to the second signaling; a number of CBGs of the scheduled physical channel corresponding to the second signaling; a number of codewords of the scheduled physical channel corresponding to the second signaling; precoding information of the scheduled physical channel corresponding to the second signaling; a number of PRBs of a scheduled cell corresponding to the second signaling; a number of CBGs of the scheduled cell corresponding to the second signaling; a number of codewords of the scheduled cell corresponding to the second signaling; or precoding information of the scheduled cell corresponding to the second signaling.

In some embodiments, an interval between the time-domain resources occupied by the second signaling and the time-domain resources occupied by the first signaling is less than a first threshold; wherein the first threshold is determined in a communication protocol, or configured by a network device, or determined by the terminal device and the network device.

In some embodiments, the apparatus further includes a third receiving module 1205. The third receiving module 1205 is configured to receive at least one of UCI or uplink data from the terminal device.

In some embodiments, the third receiving module 1205 is further configured to receive other information, signaling, messages or data except the first signaling and the second signaling.

In some embodiments, the second transmitting module 1201 and the third transmitting module 1202 may be implemented as one transmitting module.

In some embodiments, the third processing module 1203 and the fourth processing module 1204 may be implemented as one processing module.

In summary, in the apparatus according to the embodiments of the present disclosure, flexibly designing or configuring the first signaling and the second signaling is supported, thereby enabling high flexibility in scheduling the second quantity of physical channels or cells. Furthermore, because the scheduling of the physical channels or cells is achieved jointly by the first signaling and the second signaling, the total number of bits in the first signaling and the second signaling may exceed the coding limit of a single signaling in the related arts, thereby enabling simultaneous scheduling of more physical channels or cells and improving scheduling efficiency. In addition, because the first quantity has been indicated by the first signaling, upon receiving the second signaling, the terminal device may not only determine whether the received second signaling reaches the first quantity, thereby improving reliability; but also stop the blind detection upon receiving the first quantity of second signalings, thereby avoiding wasted power consumption caused by meaningless blind detection. Furthermore, during scheduling of the second quantity of physical channels or cells using the first signaling and the second signaling, in a case that the first signaling and the second signaling include common information corresponding to the scheduled physical channels or scheduled cells, then the greater the value of the second quantity, the higher the usage efficiency of the transmission resource corresponding to the first signaling and the second signaling.

It should be noted that the apparatuses according to the above embodiments are only illustrated by the division of the aforementioned functional modules. In practice, the above functions may be allocated to different functional modules as needed, that is, the internal structure of the apparatus may be divided into different functional modules to accomplish all or part of the functions described above.

Regarding the apparatuses in the embodiments of the present disclosure, the specific manner in which each module performs operations has been described in detail in the embodiments related to the method, and thus will not be elaborated herein any further.

FIG. 13 is a schematic structural diagram of a communication device (a terminal device or a network device) according to some embodiments of the present disclosure. The communication device 1300 illustrated in FIG. 13 includes a processor 1301, a receiver 1302, a transmitter 1303, a memory 1304, and a bus 1305.

The processor 1301 includes one or more processing cores, and achieves various functional applications and information processing by running software programs and modules. In some embodiments, the processor 1301 is configured to perform the functions and processes of the first processing module 1131 and/or the second processing module 1132 and/or the third processing module 1203 and/or the fourth processing module 1204.

The receiver 1302 and the transmitter 1303 may be implemented as a communication assembly. The communication assembly may be a communication chip. In some embodiments, the receiver 1302 is configured to perform the functions and processes of the first receiving module 1111 and/or the second receiving module 1112 and/or the third receiving module 1205. In some embodiments, the transmitter 1303 is configured to perform the functions and processes of the first transmitting module 1105 and/or the second transmitting module 1201 and/or the third transmitting module 1202.

The memory 1304 is connected to the processor 1301 over the bus 1305. The memory 1304 is configured to store at least one instruction, and the processor 1301 is configured to run the at least one instruction to perform various processes in the above method embodiments.

In addition, the memory 1304 may be implemented by any type or combination of volatile or non-volatile storage devices including, but not limited to: magnetic or optical disks, electrically-erasable programmable read-only memories (EEPROMs), erasable programmable read-only memories (EPROMs), static random-access memories (SRAMs), read-only memories (ROMs), magnetic memories, flash memories, and programmable read-only memories (PROMs).

In some embodiments, the receiver 1302 independently receives signals/data, or the processor 1301 controls the receiver 1302 to receive signals/data, or the processor 1301 requests the receiver 1302 to receive signals/data, or the processor 1301 cooperates with the receiver 1302 to receive signals/data.

In some embodiments, the transmitter 1303 independently transmits signals/data, or the processor 1301 controls the transmitter 1303 to transmit signals/data, or the processor 1301 requests the transmitter 1303 to transmit signals/data, or the processor 1301 cooperates with the transmitter 1303 to transmit signals/data.

Some embodiments of the present disclosure provide a computer-readable storage medium. The computer-readable storage medium stores at least one program. The at least one program, when loaded and executed by a processor, causes the processor to perform the scheduling method in the above method embodiments.

Some embodiments of the present disclosure provide a chip. The chip includes programmable logic circuitry and/or one or more program instructions, wherein a communication device equipped with the chip, when running, is caused to perform the scheduling method in the above method embodiments.

Some embodiments of the present disclosure provide a computer program product. The computer program product, when run by a computer device, causes the computer device to perform the scheduling method in the above method embodiments.

Some embodiments of the present disclosure provide a computer program. The computer program includes one or more computer instructions. The one or more computer instructions, when executed by a processor of a computer device, cause the computer device to perform the scheduling method in the above method embodiments.

A person skilled in the art shall appreciate that in the foregoing one or more examples, the functions described in the embodiments of the present disclosure may be implemented by hardware, software, firmware, or any combination thereof. The functions, when implemented by software, may be stored in a computer-readable medium or transmitted as one or more instructions or codes on the computer-readable medium. The computer-readable medium includes a computer storage medium and a communication medium. The communication medium includes any medium that facilitates transfer of a computer program from one place to another. The storage medium may be any available medium accessible by a general-purpose computer or a special-purpose computer.

Described above are optional embodiments of the present disclosure, but not intended to limit the present disclosure. Any modifications, equivalent replacements, improvements and the like made within the spirit and principles of the present disclosure should be encompassed within the scope of protection of the present disclosure.

## Claims

1. A scheduling method, performed by a terminal device, the method comprising:
receiving a first signaling, wherein information indicated by the first signaling comprises a first quantity; and
receiving a first quantity of second signalings;
wherein the first signaling and the second signaling are configured to schedule a second quantity of physical channels or cells, the first quantity is an integer greater than or equal to 0, and the second quantity is a positive integer.

2. The method according to claim 1, wherein the first quantity satisfies at least one of the following conditions:
a value of the first quantity is correlated to a value of the second quantity;
a maximum value of the first quantity is determined based on first configuration information; or
a maximum value of the first quantity is determined by a communication protocol.

3. The method according to claim 1 or 2, wherein a number of bits in the first signaling satisfies at least one of the following conditions:
the number of bits in the first signaling is determined based on a maximum value of the first quantity;
the number of bits in the first signaling is correlated to a value of the second quantity; or
a maximum number of bits in the first signaling is determined in a communication protocol.

4. The method according to claim 2, wherein the value of the first quantity is positively correlated to the value of the second quantity; or
the value of the first quantity is correlated to a numerical range to which the second quantity belongs.

5. The method according to claim 4, wherein the value of the first quantity is correlated to the numerical range to which the second quantity belongs; and
the value of the first quantity is a first value in a case where the second quantity belongs to a first numerical range;
wherein the first numerical range corresponds to a maximum value and a minimum value, wherein the maximum value is configured by a network device, determined in a communication protocol, or determined by the network device and the terminal device, and the minimum value is configured by the network device, determined in a communication protocol, or determined by the network device and the terminal device.

6. The method according to claim 2, wherein the first configuration information comprises at least one of:
a maximum number of codewords corresponding to one of the second quantity of physical channels;
a number of coding block groups (CBGs) corresponding to one of the second quantity of physical channels;
a transmission direction corresponding to one of the second quantity of physical channels;
a maximum number of codewords corresponding to one of the second quantity of cells;
a number of CBGs corresponding to one of the second quantity of cells;
a transmission direction corresponding to one of the second quantity of cells;
time-domain resources occupied by at least one physical channel in one of the second quantity of cells; or
a maximum number of hybrid automatic repeat request (HARQ) processes.

7. The method according to any one of claims 1 to 6, wherein the first signaling comprises at least one of:
first information, wherein the first information comprises signaling parameters of at least one second signaling, the at least one second signaling being at least one of the first quantity of second signalings;
second information, wherein the second information comprises common information corresponding to the second quantity of physical channels or cells; or
third information, wherein the third information comprises scheduling information for at least one of the second quantity of physical channels, or scheduling information for at least one of the second quantity of cells.

8. The method according to claim 7, wherein the signaling parameters of the at least one second signaling comprise at least one of:
a format of the at least one second signaling;
a payload of the at least one second signaling;
physical resource information of the at least one second signaling, wherein the physical resource information comprises at least one of time-domain resource information, frequency-domain resource information, or control channel information; or
transmission parameters of the at least one second signaling, wherein the transmission parameters comprise at least one of a coding scheme, a modulation scheme, a coding rate, a reference signal, or a resource mapping scheme.

9. The method according to claim 8, wherein the time-domain resource information comprises at least one of: a time-domain unit in which the at least one second signaling is located, a start symbol occupied by the at least one second signaling, an end symbol occupied by the at least one second signaling, or a number of symbols occupied by the at least one second signaling; and/or
the frequency-domain resource information comprises at least one of: a start resource block (RB) occupied by the at least one second signaling, a start subcarrier occupied by the at least one second signaling, an end RB occupied by the at least one second signaling, an end subcarrier occupied by the at least one second signaling, a number of RBs occupied by the at least one second signaling, or a number of subcarriers occupied by the at least one second signaling; and/or
the control channel information comprises at least one of a search space identifier, a search space number, an aggregation level, a candidate set identifier, or a candidate set number.

10. The method according to claim 8 or 9, wherein
part or all of the signaling parameters of different instances of the at least one second signaling are uniformly indicated by the first information; or
part or all of the signaling parameters of different instances of the at least one second signaling are respectively indicated by the first information.

11. The method according to any one of claims 7 to 10, wherein the second information comprises at least one of:
an identifier of the first signaling;
an identifier of a format of the first signaling;
a downlink allocation index;
scheduled physical uplink control channel (PUCCH) transmit power control (TPC);
a PUCCH resource indicator;
a physical downlink shared channel (PDSCH) to hybrid automatic repeat request (HARQ) timing indicator;
a one-shot HARQ-acknowledgment (HARQ-ACK) request;
time-domain resource allocation information;
a priority indicator;
an indicator of the second quantity of cells; or
an open-loop power control parameter indication.

12. The method according to any one of claims 1 to 11, wherein the second signaling comprises at least one of:
identification information of the second signaling;
identification information of the first signaling;
identification information of at least one of the second quantity of physical channels;
identification information of at least one of the second quantity of cells;
first information, wherein the first information comprises signaling parameters of at least one second signaling, the at least one second signaling being at least one of the first quantity of second signalings; or
third information, wherein the third information comprises scheduling information for at least one of the second quantity of physical channels, or scheduling information for at least one of the second quantity of cells.

13. The method according to any one of claims 7 to 12, wherein the third information comprises at least one of:
a frequency-domain resource allocation for a first physical channel;
a hybrid automatic repeat request (HARQ) process number carried by a first physical channel;
a modulation and coding scheme (MCS) for a first physical channel;
a new data indicator for each transport block (TB);
a redundancy version for each TB; or
a time-domain resource allocation for a first physical channel;
wherein the first physical channel is at least one of the second quantity of physical channels, or at least one physical channel transmitted within the second quantity of cells.

14. The method according to any one of claims 7 to 13, wherein whether the first signaling comprises the third information is configured by a network device.

15. The method according to any one of claims 1 to 14, wherein at least one of the first signaling or the second signaling is downlink control information (DCI).

16. The method according to any one of claims 1 to 15, wherein a format of the first signaling comprises one of downlink control information (DCI) format 0-0, DCI format 0-1, DCI format 0-2, DCI format 0-3, DCI format 1-0, DCI format 1-1, DCI format 1-2, or DCI format 1-3.

17. The method according to any one of claims 1 to 16, wherein the first signaling is transmitted based on at least one of a coding scheme for a physical downlink control channel (PDCCH), a modulation scheme for the PDCCH, a resource mapping scheme for the PDCCH, or a physical channel structure of the PDCCH.

18. The method according to any one of claims 1 to 17, wherein the second signaling is transmitted based on at least one of a coding scheme for a physical downlink control channel (PDCCH), a modulation scheme for the PDCCH, a resource mapping scheme for the PDCCH, or a physical channel structure of the PDCCH.

19. The method according to any one of claims 1 to 18, wherein the second signaling is transmitted based on at least one of a physical channel structure of a physical downlink shared channel (PDSCH) or a reference signal structure of the PDSCH.

20. The method according to any one of claims 1 to 18, wherein the second signaling is transmitted based on polar coding, low-density parity check (LDPC) coding, or Reed-Muller (RM) coding.

21. The method according to any one of claims 1 to 20, wherein payloads of different second signalings are the same or different.

22. The method according to claim 21, wherein at least one of the payload of the second signaling or a maximum payload size of the second signaling is determined based on at least one of:
second configuration information, wherein the second configuration information is used to configure at least one of the payload of the second signaling or the maximum payload size of the second signaling;
a number of physical resource blocks (PRBs) of at least one of aggregated cells corresponding to the second quantity of physical channels or cells;
a number of coding block groups (CBGs) of at least one of the aggregated cells;
a number of codewords of at least one of the aggregated cells;
precoding information of at least one of the aggregated cells;
a number of PRBs of a scheduled physical channel corresponding to the second signaling;
a number of CBGs of the scheduled physical channel corresponding to the second signaling;
a number of codewords of the scheduled physical channel corresponding to the second signaling;
precoding information of the scheduled physical channel corresponding to the second signaling;
a number of PRBs of a scheduled cell corresponding to the second signaling;
a number of CBGs of the scheduled cell corresponding to the second signaling;
a number of codewords of the scheduled cell corresponding to the second signaling; or
precoding information of the scheduled cell corresponding to the second signaling.

23. The method according to any one of claims 1 to 22, wherein a time-domain relationship between the first signaling and the second signaling satisfies at least one of the following conditions:
a start position of time-domain resources occupied by the second signaling is aligned with a start position of time-domain resources occupied by the first signaling;
an end position of the time-domain resources occupied by the second signaling is aligned with an end position of the time-domain resources occupied by the first signaling;
the start position of the time-domain resources occupied by the second signaling is aligned with the end position of the time-domain resources occupied by the first signaling;
the start position of the time-domain resources occupied by the second signaling immediately follows the start position of the time-domain resources occupied by the first signaling;
the end position of the time-domain resources occupied by the second signaling immediately follows the end position of the time-domain resources occupied by the first signaling;
the start position of the time-domain resources occupied by the second signaling immediately follows the end position of the time-domain resources occupied by the first signaling;
an interval between the time-domain resources occupied by the second signaling and the time-domain resources occupied by the first signaling is less than a first threshold;
an interval between a start time-domain unit of the time-domain resources occupied by the second signaling and a start time-domain unit of the time-domain resources occupied by the first signaling is less than the first threshold;
an interval between an end time-domain unit of the time-domain resources occupied by the second signaling and an end time-domain unit of the time-domain resources occupied by the first signaling is less than the first threshold; or
an interval between the start time-domain unit of the time-domain resources occupied by the second signaling and the end time-domain unit of the time-domain resources occupied by the first signaling is less than the first threshold;
wherein the first threshold is determined in a communication protocol, or configured by a network device, or determined by the terminal device and the network device.

24. The method according to any one of claims 1 to 23, wherein physical resources used by the second signaling are partially overlapped with physical resources used by the first signaling;
wherein the physical resources comprise at least one of time-domain resources, frequency-domain resources, a search space corresponding to a control channel, an aggregation level corresponding to the control channel, or a candidate set corresponding to the control channel.

25. A scheduling method, performed by a network device, the method comprising:
transmitting a first signaling, wherein information indicated by the first signaling comprises a first quantity; and
transmitting a first quantity of second signalings;
wherein the first signaling and the second signaling are configured to schedule a second quantity of physical channels or cells, the first quantity is an integer greater than or equal to 0, and the second quantity is a positive integer.

26. The method according to claim 25, wherein the first quantity satisfies at least one of the following conditions:
a value of the first quantity is correlated to a value of the second quantity;
a maximum value of the first quantity is configured by a network device; or
a maximum value of the first quantity is determined by a communication protocol.

27. The method according to claim 25 or 26, wherein a number of bits in the first signaling satisfies at least one of the following conditions:
the number of bits in the first signaling is determined based on a maximum value of the first quantity;
the number of bits in the first signaling is correlated to a value of the second quantity;
a maximum number of bits in the first signaling is determined by a communication protocol.

28. The method according to claim 26, wherein the value of the first quantity is positively correlated to the value of the second quantity; or
the value of the first quantity is correlated to a numerical range to which the second quantity belongs.

29. The method according to claim 28, wherein the value of the first quantity is correlated to the numerical range to which the second quantity belongs;
the value of the first quantity is a first value in a case where the second quantity belongs to a first numerical range;
wherein the first numerical range corresponds to a maximum value and a minimum value, wherein the maximum value is configured by a network device, determined in a communication protocol, or determined by the network device and the terminal device, and the minimum value is configured by the network device, determined in a communication protocol, or determined by the network device and the terminal device.

30. The method according to claim 26 or 27, wherein the maximum value of the first quantity is configured by the network device based on at least one piece of the following information:
a maximum number of codewords corresponding to one of the second quantity of physical channels;
a number of coding block groups (CBGs) corresponding to one of the second quantity of physical channels;
a transmission direction corresponding to one of the second quantity of physical channels;
a maximum number of codewords corresponding to one of the second quantity of cells;
a number of CBGs corresponding to one of the second quantity of cells;
a transmission direction corresponding to one of the second quantity of cells;
time-domain resources occupied by at least one physical channel in one of the second quantity of cells; or
a maximum number of hybrid automatic repeat request (HARQ) processes.

31. The method according to any one of claims 25 to 30, wherein the first signaling comprises at least one of:
first information, wherein the first information comprises signaling parameters of at least one second signaling, the at least one second signaling being at least one of the first quantity of second signalings;
second information, wherein the second information comprises common information corresponding to the second quantity of physical channels or cells; or
third information, wherein the third information comprises scheduling information for at least one of the second quantity of physical channels, or scheduling information for at least one of the second quantity of cells.

32. The method according to claim 31, wherein the signaling parameters of the at least one second signaling comprise at least one of:
a format of the at least one second signaling;
a payload of the at least one second signaling;
physical resource information of the at least one second signaling, wherein the physical resource information comprises at least one of time-domain resource information, frequency-domain resource information, or control channel information; or
transmission parameters of the at least one second signaling, wherein the transmission parameters comprise at least one of a coding scheme, a modulation scheme, a coding rate, a reference signal, or a resource mapping scheme.

33. The method according to claim 32, wherein the time-domain resource information comprises at least one of: a time-domain unit in which the at least one second signaling is located, a start symbol occupied by the at least one second signaling, an end symbol occupied by the at least one second signaling, or a number of symbols occupied by the at least one second signaling; and/or
the frequency-domain resource information comprises at least one of: a start resource block (RB) occupied by the at least one second signaling, a start subcarrier occupied by the at least one second signaling, an end RB occupied by the at least one second signaling, an end subcarrier occupied by the at least one second signaling, a number of RBs occupied by the at least one second signaling, or a number of subcarriers occupied by the at least one second signaling; and/or
the control channel information comprises at least one of a search space identifier, a search space number, an aggregation level, a candidate set identifier, or a candidate set number.

34. The method according to claim 32 or 33, further comprising:
uniformly indicating part or all of the signaling parameters of different instances of the at least one second signaling over the first information; or
respectively indicating part or all of the signaling parameters of different instances of the at least one second signaling over the first information.

35. The method according to any one of claims 31 to 34, wherein the second information comprises at least one of:
an identifier of the first signaling; an identifier of a format of the first signaling; a downlink allocation index; scheduled physical uplink control channel (PUCCH) transmit power control (TPC); a PUCCH resource indicator; a physical downlink shared channel (PDSCH) to hybrid automatic repeat request (HARQ) timing indicator; a one-short HARQ-acknowledgement (HARQ-ACK) request; time-domain resource allocation information; a priority indicator; an indicator of the second quantity of cells; or an open-loop power control parameter indication.

36. The method according to any one of claims 25 to 35, wherein the second signaling comprises at least one of:
identification information of the second signaling; identification information of the first signaling;
identification information of at least one of the second quantity of physical channels;
identification information of at least one of the second quantity of cells;
first information, wherein the first information comprises signaling parameters of at least one second signaling, the at least one second signaling being at least one of the first quantity of second signalings; or
third information, wherein the third information comprises scheduling information for at least one of the second quantity of physical channels, or scheduling information for at least one of the second quantity of cells.

37. The method according to any one of claims 31 to 36, wherein the third information comprises at least one of:
a frequency-domain resource allocation for a first physical channel; a hybrid automatic repeat request (HARQ) process number carried by a first physical channel; a modulation and coding scheme (MCS) for a first physical channel; a new data indicator for each transport block (TB); a redundancy version for each TB; or a time-domain resource allocation for a first physical channel;
wherein the first physical channel is at least one of the second quantity of physical channels, or at least one physical channel transmitted within the second quantity of cells.

38. The method according to any one of claims 31 to 37, further comprising:
configuring the first signaling to include or exclude the third information.

39. The method according to any one of claims 25 to 38, wherein at least one of the first signaling or the second signaling is downlink control information (DCI).

40. The method according to any one of claims 25 to 39, wherein a format of the first signaling comprises one of downlink control information (DCI) format 0-0, DCI format 0-1, DCI format 0-2, DCI format 0-3, DCI format 1-0, DCI format 1-1, DCI format 1-2, or DCI format 1-3.

41. The method according to any one of claims 25 to 40, wherein the first signaling is transmitted based on at least one of a coding scheme for a physical downlink control channel (PDCCH), a modulation scheme for the PDCCH, a resource mapping scheme for the PDCCH, or a physical channel structure of the PDCCH.

42. The method according to any one of claims 25 to 41, wherein the second signaling is transmitted based on at least one of a coding scheme for a physical downlink control channel (PDCCH), a modulation scheme for the PDCCH, a resource mapping scheme for the PDCCH, or a physical channel structure of the PDCCH.

43. The method according to any one of claims 25 to 42, wherein the second signaling is transmitted based on at least one of a physical channel structure of a physical downlink shared channel (PDSCH) or a reference signal structure of the PDSCH.

44. The method according to any one of claims 25 to 43, wherein the second signaling is transmitted based on polar coding, low-density parity check (LDPC) coding, or Reed-Muller coding (RM).

45. The method according to any one of claims 25 to 44, wherein payloads of different second signalings are the same or different.

46. The method according to claim 45, wherein at least one of the payload of the second signaling or a maximum payload size of the second signaling is determined based on at least one of:
second configuration information, wherein the second configuration information is used to configure at least one of the payload of the second signaling or the maximum payload size of the second signaling;
a number of physical resource blocks (PRBs) of at least one of aggregated cells corresponding to the second quantity of physical channels or cells;
a number of coding block groups (CBGs) of at least one of the aggregated cells;
a number of codewords of at least one of the aggregated cells;
precoding information of at least one of the aggregated cells;
a number of PRBs of a scheduled physical channel corresponding to the second signaling;
a number of CBGs of the scheduled physical channel corresponding to the second signaling;
a number of codewords of the scheduled physical channel corresponding to the second signaling;
precoding information of the scheduled physical channel corresponding to the second signaling;
a number of PRBs of a scheduled cell corresponding to the second signaling;
a number of CBGs of the scheduled cell corresponding to the second signaling;
a number of codewords of the scheduled cell corresponding to the second signaling; or
precoding information of the scheduled cell corresponding to the second signaling.

47. The method according to any one of claims 25 to 46, wherein a time-domain relationship between the first signaling and the second signaling satisfies at least one of the following conditions:
a start position of time-domain resources occupied by the second signaling is aligned with a start position of time-domain resources occupied by the first signaling;
an end position of the time-domain resources occupied by the second signaling is aligned with an end position of the time-domain resources occupied by the first signaling;
the start position of the time-domain resources occupied by the second signaling is aligned with the end position of the time-domain resources occupied by the first signaling;
the start position of the time-domain resources occupied by the second signaling immediately follows the start position of the time-domain resources occupied by the first signaling;
the end position of the time-domain resources occupied by the second signaling immediately follows the end position of the time-domain resources occupied by the first signaling;
the start position of the time-domain resources occupied by the second signaling immediately follows the end position of the time-domain resources occupied by the first signaling;
an interval between the time-domain resources occupied by the second signaling and the time-domain resources occupied by the first signaling is less than a first threshold;
an interval between a start time-domain unit of the time-domain resources occupied by the second signaling and a start time-domain unit of the time-domain resources occupied by the first signaling is less than the first threshold;
an interval between an end time-domain unit of the time-domain resources occupied by the second signaling and an end time-domain unit of the time-domain resources occupied by the first signaling is less than the first threshold; or
an interval between the start time-domain unit of the time-domain resources occupied by the second signaling and the end time-domain unit of the time-domain resources occupied by the first signaling is less than the first threshold;
wherein the first threshold is determined in a communication protocol, or configured by a network device, or determined by the terminal device and the network device.

48. The method according to any one of claims 25 to 47, wherein physical resources used by the second signaling are partially overlapped with physical resources used by the first signaling;
wherein the physical resources comprise at least one of time-domain resources, frequency-domain resources, a search space corresponding to a control channel, an aggregation level corresponding to the control channel, or a candidate set corresponding to the control channel.

49. A scheduling apparatus, comprising:
a first receiving module, configured to receive a first signaling, wherein information indicated by the first signaling comprises a first quantity;
a second receiving module, configured to receive a first quantity of second signalings;
wherein the first signaling and the second signaling are configured to schedule a second quantity of physical channels or cells, wherein the first quantity is an integer greater than or equal to 0, and the second quantity is a positive integer.

50. A scheduling apparatus, comprising:
a second transmitting module, configured to transmit a first signaling, wherein information indicated by the first signaling comprises a first quantity;
a third transmitting module, configured to transmit the first quantity of second signalings;
wherein the first signaling and the second signaling are configured to schedule a second quantity of physical channels or cells, wherein the first quantity is an integer greater than or equal to 0, and the second quantity is a positive integer.

51. A terminal device, comprising:
a processor; a transceiver connected to the processor; a memory for storing one or more executable instructions of the processor;
wherein the processor, when loading and executing the one or more executable instructions, is caused to perform the scheduling method as defined in any one of claims 1 to 24.

52. A network device, comprising:
a processor; a transceiver connected to the processor; a memory for storing one or more executable instructions of the processor;
wherein the processor, when loading and executing the one or more executable instructions, is caused to perform the scheduling method as defined in any one of claims 25 to 48.

53. A computer-readable storage medium, wherein the computer-readable storage medium is configured to store one or more executable instructions, wherein the one or more executable instructions, when loaded and executed by a processor, cause the processor to perform the scheduling method as defined in any one of claims 1 to 24 or 25 to 48.

54. A chip, comprising a programmable logic circuit or a program, wherein the chip is configured to perform the scheduling method as defined in any one of claims 1 to 24 or 25 to 48.

55. A computer program product, wherein the computer program product comprises one or more computer instructions, wherein the one or more computer instructions are stored in a computer-readable storage medium, and the one or more computer instructions, when read by a processor of a computer device from the computer-readable storage medium and executed by the processor, cause the computer device to perform the scheduling method as defined in any one of claims 1 to 24 or 25 to 48.

56. A computer program, wherein the computer program comprises one or more computer instructions, and the one or more computer instructions, when executed by a processor of a computer device, cause the computer device to perform the scheduling method as defined in any one of claims 1 to 24 or 25 to 48.
